(19) Europäisches Patentamt
European Patent Office
Office européen des brevets

(11) **EP 4 620 752 B1**

(12) **EUROPEAN PATENT SPECIFICATION**

(45) Date of publication and mention
of the grant of the patent:
**22.07.2026 Bulletin 2026/30**

(21) Application number: **24305414.5**

(22) Date of filing: **20.03.2024**

(51) International Patent Classification (IPC):
***B60T 7/12*** *(2006.01)*     ***B61H 11/02*** *(2006.01)*
***B61L 15/00*** *(2006.01)*     ***F16D 59/00*** *(2006.01)*

(52) Cooperative Patent Classification (CPC):
**B60T 7/126; B60T 7/22; B60T 13/665;
B60T 17/228; B61H 11/02; B61L 15/0062;**
B60T 2201/022

(54) **SYSTEM AND METHOD FOR INITIATING AN EMERGENCY BRAKE OF A GUIDED VEHICLE**

SYSTEM UND VERFAHREN ZUM AUSLÖSEN EINER NOTBREMSE EINES GEFÜHRTEN
FAHRZEUGS

SYSTÈME ET PROCÉDÉ POUR DÉCLENCHER UN FREIN D'URGENCE D'UN VÉHICULE GUIDÉ

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(43) Date of publication of application:
**24.09.2025 Bulletin 2025/39**

(73) Proprietor: **Siemens Mobility SAS
92320 Châtillon (FR)**

(72) Inventors:
• **Guislain, Pierre Olivier
78460 Chevreuse (FR)**
• **Marco, André
92800 Puteaux (FR)**

(74) Representative: **Siemens Patent Attorneys
Postfach 22 16 34
80506 München (DE)**

(56) References cited:
**EP-B1- 3 090 918**     **US-A1- 2016 046 308
US-A1- 2021 107 537**

## Description

The present invention concerns a system and a method for initiating an emergency brake of a guided vehicle.

The present invention falls within the field of safe braking models for guided vehicles, wherein "guided vehicle" refers to public transport means such as subways, trains or train units, metros, etc., as well as load transporting means such as, for example, freight trains, for which safety is a very important aspect, and which are guided along a railway or track by guiding means, like a rail or a pair of rails. In particular, the present invention relates to Guaranteed Emergency Brake Rate (GEBR) that is defined as the minimum emergency brake rate achieved by a train on level tangent track under the range of environmental conditions and worst-case credible latent brake equipment failure modes, which can be anticipated to exist for that train in a specific application of a Communications-Based Train control (see the definition provided in IEEE Std 1474.1™-2004: IEEE Standard for Communications-Based Train control (CBTC), Performance and functional Requirements).

According to current solutions, the GEBR that is taken for modelling and controlling emergency braking for a guided vehicle relies thus on a worst-case adhesion between the wheel of the guided vehicle and a wheel supporting surface (e.g. a rail or a ground) for all speeds of the guided vehicle. However, it is known that the friction coefficient decreases with speed. Consequently, for some speeds, the value of the GEBR is smaller than it could be in reality while ensuring a same safety, which means also that the safe braking distance between guided vehicles, as well as headway between guided vehicles, that are used when considering said GEBR value, are greater than an optimal value they could take when considering the impact of velocity on the friction coefficient.

EP 3 090 918 B1 discloses a system for automatically controlling a guided vehicle comprising a control unit that is configured for controlling the guided vehicle speed according to a speed profile, where the speed profile defines a speed limit for the guided vehicle.

There is therefore a need to optimize the emergency braking of guided vehicles.

An objective of the present invention is thus to propose a system and a method for initiating an emergency braking of a guided vehicle that are able to optimize said emergency braking in function of a speed of the guided vehicle.

This objective is achieved by the measures taken in accordance with the independent claims. Further advantageous embodiments are proposed by the dependent claims.

According to an aspect of the invention, a system for initiating an emergency braking (called hereafter "EB system") of a guided vehicle is proposed, wherein said EB system is configured for cooperating with a braking system of the guided vehicle, said braking system being capable of performing said emergency braking typically under control of the EB system according to the invention.

According to the present invention, said EB system for initiating an emergency braking comprises:

- a processing unit, comprising typically a processor, said processing unit being configured for initiating said emergency braking if it detects that a guided vehicle speed $V$ at a guided vehicle position $X$ exceeds a speed limit $V_{limit}$ defined for said position $X$ for said guided vehicle in order to ensure, for said guided vehicle, a speed $V_0$ at a final position $X_0$ located upfront the guided vehicle on a route followed by said guided vehicle;

the EB system being characterized in that said processing unit is configured for automatically determining the speed limit $V_{limit}$ for said position $X$ from, or in function of, an emergency brake rate (hereafter "EBR") function which varies in function of the speed of the guided vehicle. Typically, for a given remarkable position $P_j$, said EBR function varies in function of the guided vehicle speed at said remarkable position $P_j$. According to the present invention, the EBR function takes therefore different values in function of the guided vehicle speed at said remarkable position $P_j$, wherein the remarkable position $P_j$ is typically located upfront the guided vehicle with respect to its (current) position $X$ (i.e. downstream with respect to the motion direction of the guided vehicle).

The present invention also concerns a method for initiating an emergency braking of a guided vehicle by means of the above-mentioned EB system that is configured for cooperating with said braking system of the guided vehicle, the method according to the invention comprising the following steps:

- determining whether a speed $V$ of the guided vehicle at a guided vehicle position $X$ exceeds a speed limit $V_{limit}$ defined for said position $X$ for said guided vehicle;
- initiating said emergency braking if the guided vehicle speed $V$ at the guided vehicle position $X$ exceeds the speed limit $V_{limit}$ in order to ensure, for said guided vehicle, a speed $V_0$ at a final position $X_0$ located upfront the guided vehicle on a route followed by said guided vehicle;

the method being characterized in that it comprises:

- automatically determining the speed limit $V_{limit}$ for said position $X$ from an emergency brake rate function which, for a

given remarkable position $P_j$, varies in function of the guided vehicle speed at said remarkable position $P_j$.

Compared to existing techniques, the present invention proposes thus to determine said speed limit $V_{limit}$ by taking into account variations of values taken by the EBR function in function of the speed of the guided vehicle. By this way, it becomes possible to take into account variations of the adhesion between a guided vehicle wheel and a wheel supporting surface in function of the speed of the guided vehicle.

Further aspects of the present invention will be better understood through the following drawings, wherein like numerals are used for like and corresponding parts:

Figure 1    schematic illustration of a network according to the invention.

Figure 2    schematic illustration of an EBR function according to the invention.

Figure 3    schematic illustration of a guided vehicle comprising an EB system according to the invention.

Figure 4    schematic illustration of a speed limit in function of the position according to the invention.

Figure 5    schematic illustration of an optimization of the speed limit in function of the position of the guided vehicle and its length according to the invention.

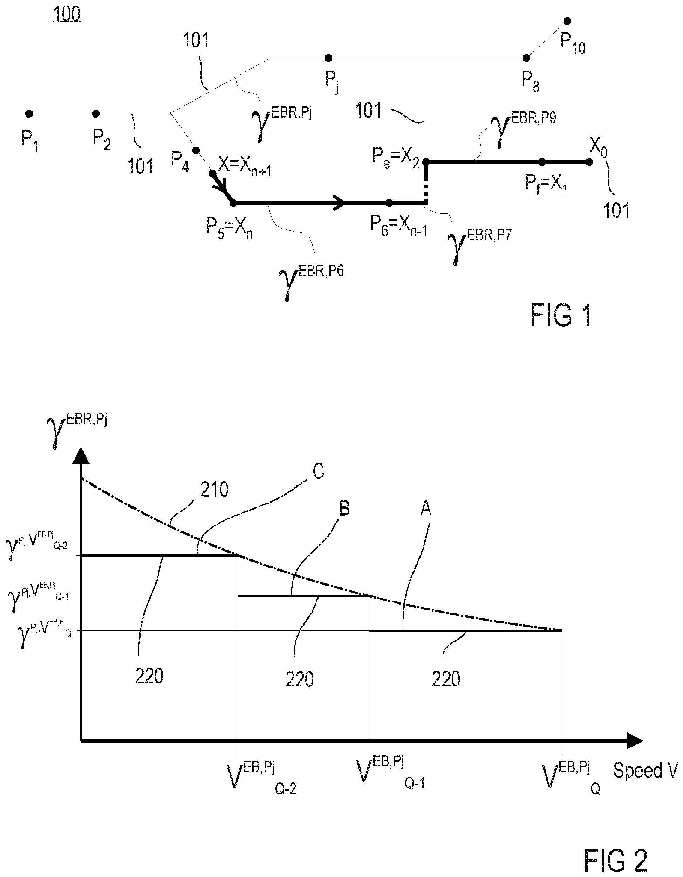

Figures 1 to 5 show preferred embodiments of the invention and will be used hereafter for better explaining the concept of the invention.

In Figure 1, a route network 100 is shown. Said route network 100 comprises different segments of routes or tracks 101 that interconnect or intersect at some points in order to form said network 100. Said route network 100 is for instance a network of a public transport, e.g. a railway network. Such route networks are well-known to the skilled persons and do not need to be further described here.

Guided vehicles according to the invention are configured for travelling or moving on said route network 100, i.e. along said route or track segments. The path or route followed by the guided vehicle, which can be defined as a succession of said route or track segments, is notably predefined, i.e. the starting and ending points of said route are known, the guided vehicle having to move from said starting point towards said ending point. In other words, the itinerary followed by the guided vehicle is known. In this context, the present invention proposes a new way of determining a speed limit $V_{limit}$ that is used by the EB system according to the invention for automatically initiating an emergency braking of the guided vehicle in case a speed of the guided vehicle would exceed said speed limit $V_{limit}$.

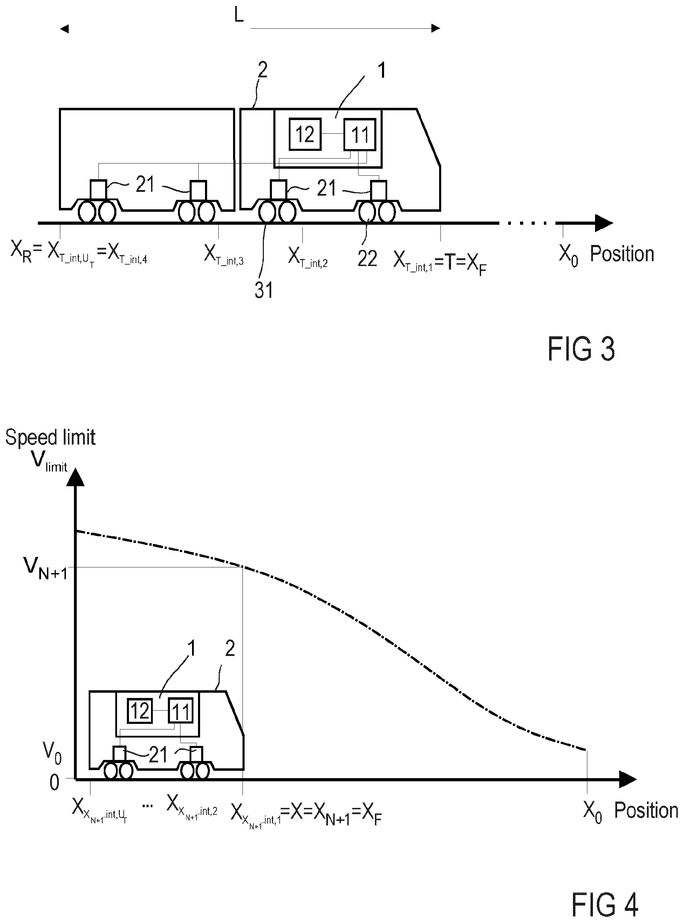

Figure 3 schematically represents an EB system 1 according to the invention installed within a guided vehicle 2. The present invention also concerns a guided vehicle 2 comprising the EB system 1 according to the invention. Said EB system 1 is configured for cooperating with a braking system 21 of the guided vehicle 2, wherein said braking system 21 is able to carry out an emergency braking of the guided vehicle 2. In particular, the EB system according to the invention is connected to said braking system for enabling a sending of a signal configured for launching said emergency braking by the braking system. For instance, the EB system 1 comprises a processing unit 11 comprising at least one processor, wherein said processing unit further comprises at least one output configured for being connected to said braking system 21 in order to send to said braking system 21 said signal configured for launching the emergency braking of the guided vehicle. Typically, the processing unit 11 is configured for comparing a current speed of the guided vehicle at a current position X with a speed limit $V_{limit}$ defined for said current position X as illustrated in Fig. 4, and for automatically sending said signal if the current speed exceeds said speed limit. For this purpose, the EB system 1, preferentially its processing unit 11, is configured for acquiring or receiving the current position and speed of the guided vehicle, preferentially in real time.

The guided vehicle 2, for instance a train, typically comprises wheels 22 configured for running on a contact surface 31 of said route or track segment, wherein the braking of said wheels is controlled by the braking system 21. For instance, said contact surface might be a top surface of a head of a rail equipping said route or track segment, wherein wheels 31 of the guided vehicle 2 are configured for running on said top surface of the rail head. The adhesion of the guided vehicle wheels with said contact surface of the route or track during a braking implemented by the braking system 21 determines the efficiency of the emergency braking realized by the guided vehicle. It is then clear that within said route network 100, the guided vehicle might follow different routes, and for each route, different adhesion conditions might be faced by said guided vehicle. In other words, the adhesion of the wheels on said contact surface is not uniform across the whole network 100.

The present invention proposes to better adapt or adjust the speed limit $V_{limit}$ that is used for triggering the emergency braking in function of different adhesion conditions that might be faced by the guided vehicle 2 on said network 100 so that a speed $V_0$ might be ensured at a final position $X_0$, for ensuring for instance that the guided vehicle be at standstill at the position $X_0$. Of course, the speed $V_0$ and the final position $X_0$ are known and predefined parameters, wherein said speed $V_0$ is superior or equal to 0. More precisely, the present invention proposes an EB system 1 that is capable of optimizing the emergency braking of the guided vehicle in function of a variation of adhesion conditions that might be faced by the guided vehicle moving on said network 100, and notably, in function of a variation of said adhesion in function of the speed of the guided vehicle 2. More practically, when the EB system 1 detects that, at a position X (i.e. the current position of the guided vehicle on the network 100), the speed limit $V_{limit}$ determined for said position X is exceeded, then it automatically sends said signal to the braking system 21 for initiating said emergency braking which aims to bring the guided vehicle at the speed $V_0$ at said final position $X_0$ located upfront the guided vehicle on the route followed by the latter.

While existing emergency braking techniques developed for guided vehicles propose different emergency brake rates along the track, wherein each emergency brake rate is assumed constant whatever the speed of the guided vehicle, the present invention introduces a double dependency of the emergency brake rate on both the position of the guided vehicle on the track and its speed. Indeed, the present invention proposes to calculate, notably by using an iterative process, said speed limit $V_{limit}$ in function of an EBR function that varies with the speed of the guided vehicle 2. This enables to better adjust the value of said speed limit $V_{limit}$ in function of varying adhesion conditions of the route followed by the guided vehicle.

An illustration of the EBR function in function of the guided vehicle speed V is shown in Figure 2 for a position $P_j$. As illustrated by the dash-dotted line 210, values of the EBR function vary in function of the speed V of the guided vehicle. In other words, depending on the speed of the guided vehicle at said position $P_j$, the EBR function value might be different. Typically, the EBR function illustrated in Fig. 2 decreases with increasing speeds, that is

$$\gamma^{\text{EBR},Pj}(V_{Q-2}^{EB,Pj}) = \gamma^{Pj,V_{Q-2}^{EB,Pj}} > \gamma^{\text{EBR},Pj}(V_{Q-1}^{EB,Pj}) = \gamma^{Pj,V_{Q-1}^{EB,Pj}} \quad \text{for} \quad V_{Q-2}^{EB,Pj} < V_{Q-1}^{EB,Pj}.$$ In particular, the

EBR function defined for or associated with a first position might be different from the EBR function defined for or associated with a second position different from the first position, so that for a same guided vehicle speed, the corresponding value of the EBR function might be different when considering different positions on said network 100.

The present invention proposes in particular to store in a memory or database 12 of the EB system 1 according to the invention, and at least for said route followed by the guided vehicle, a set S of positions $P_j$, called hereafter "remarkable" positions $P_j$, with j=1,...,M, i.e. S = {$P_1$,..., $P_M$} with M ≥ 1, located along said route that has to be followed by the guided vehicle. Preferentially, such remarkable positions $P_j$ located along route or track segments of the route network are stored for the whole route network 100. The goal is to define and store for the route followed by the guided vehicle, preferentially for the whole network, such remarkable positions at specific location of the network, wherein said remarkable positions are positions that may impact the emergency braking of the guided vehicle. Each of said remarkable positions is typically characterized by coordinates which enable to locate said remarkable position within the network 100, enabling thus to determine at which positions of the network 100, the EB system has to take care about parameters or conditions impacting the emergency braking. Examples of remarkable positions are illustrated by $P_1$, $P_2$, $P_4$, $P_5$, $P_6$, $P_8$, $P_{10}$ in Fig. 1.

Preferentially, each remarkable position $P_j$ belongs to at least one of the following types of positions:

- Type I: it is a position along said route at which there is a change of adhesion value between a guided vehicle wheel and a surface on which said wheel is configured for running; and/or
- Type II: it is a position along said route at which there is a change of gradient value with respect to said surface on which said wheel is configured for running (i.e. said gradient being a measure of a deviation of said surface from the horizontal, corresponding thus to the slope of the route at the remarkable position $P_j$); and/or
- Type III: it is a position along said route at which there is a constraint of speed $V_{\text{constraint speed}}$ (i.e. each position of type III is associated to a speed constraint, imposing for instance a maximal speed = $V_{\text{constraint speed}}$ at said remarkable position).

In particular, for each remarkable position $P_j$ of Type I, said database or memory 12 stores an EBR function $\gamma^{\text{EBR},Pj}$(V) that is a function of the speed V of the guided vehicle at said remarkable position $P_j$, i.e. $\gamma^{\text{EBR},Pj}(V)=\gamma^{Pj,v}$. Preferentially, such EBR function is stored for, or at least associated with, each remarkable position. Indeed, and preferentially, if said EBR function is stored only for the remarkable positions of type I, then the processing unit might be configured for determining the EBR function associated with any other type of remarkable positions from the EBR function stored for the remarkable positions of type I, as explained hereafter, preferentially storing then for each remarkable position an EBR function.

Therefore, and preferentially, for each remarkable position $P_j$ according to the present invention, said database or memory 12 stores or associates an EBR function $\gamma^{\text{EBR},Pj}$(V) that is a function of the speed V of the guided vehicle at said remarkable position $P_j$, with $\gamma^{\text{EBR},Pj}(V)=\gamma^{Pj,v}$. The EBR function $\gamma^{\text{EBR},Pj}$(V) associated to the remarkable position $P_j$ assigns thus an EBR value $\gamma^{Pj,v}$ to a speed value V of the guided vehicle. In particular, for a given direction of travel of the guided vehicle along a route towards the remarkable position $P_j$, the EBR function $\gamma^{\text{EBR},Pj}$(V) defined for the remarkable position $P_j$

applies to (i.e. is associated with) any position X' along said route that is located between the remarkable position $P_j$ and a remarkable position $P_r$ of said set S, with $r \neq j$, $r \in \{1,...,M\}$), wherein the remarkable position $P_r$ is a directly previous remarkable position with respect to the remarkable position $P_j$ when following said route towards $P_j$ according to said given direction. Preferentially, if the database or memory stores the EBR function only for the remarkable position of type I, then $P_j$ and $P_r$ are remarkable positions of type I, and the EBR function that is associated to or that applies to any remarkable position (different from the type I) located between $P_j$ and $P_r$ is determined by the processing unit of the EB system as previously explained.

In other words, between two directly neighboring remarkable positions (notably when they are remarkable positions of type I), the EBR function defined for, or associated with, one of said directly neighboring remarkable positions applies to any point comprised between said directly neighboring remarkable positions. The preferred embodiment described above is based on the assumption that the EBR function that applies to the positions located between two directly neighboring remarkable positions, that are preferentially of type I, is the one of the directly neighboring remarkable position that will be crossed the latest when the guided vehicle is following said route on said network according to said direction of travel. This assumption has been made for simplifying the explanation of the concept of the invention. Of course, other ways of defining which one of the EBR functions of directly neighboring remarkable positions, that are preferentially of type I, applies might be defined by the skilled person. For instance, for the guided vehicle moving from a first remarkable position (that is preferentially of type I) to a second remarkable position that is a direct neighbor (and preferentially of type I) to the first remarkable position, one can also have the EBR function of said first remarkable position applying to any position comprised between said first and said second remarkable position. In any case, the set of remarkable positions (or at least the set of remarkable positions of type I) is used by the EB system for determining which EBR function applies on, or is assigned to, each section of route connecting and comprised between two directly neighboring remarkable positions of said set, the EBR functions of one of the directly neighboring positions applying to the set of positions of said route section comprised between said two directly neighboring positions.

As illustrated by the dash-dotted line 210 of Fig. 2, the EBR function assigns different EBR values to different speed values. The aim of the EBR function is to model the adhesion of the guided vehicle wheels to the contact surface in function of the speed of the guided vehicle. Different models might be used by the skilled person for modeling said adhesion. For instance, the EBR function might be a piecewise constant function taking constant values on successive speed intervals according to $\gamma^{EBR, Pj}(V) = \gamma^{P_j, V_t^{EB,P_j}} = \text{constant\_t}$ if $V_{t-1}^{EB,P_j} \leq V < V_t^{EB,P_j}$, with $t=1,...,Q$, $Q \geq 2$ being the number of speed intervals, Q and t being positive integers. Such a piecewise constant function is illustrated in Fig. 2 by the line segments 220, with notably constant_1 > constant_2 > ... > constant _Q-1 > constant_Q. In other words, the value of the EBR function is considered as constant for successive sets of speeds of the guided vehicle, each set being associated to a different constant value of the EBR function. Of course, other models might be chosen by the skilled person.

Preferentially, the processing unit 11 is further configured for automatically determining, for a position T (see Fig. 3) along the route followed by the guided vehicle 2, a set $L3_T$ of guided vehicle internal positions that are located within the guided vehicle along its length L between its front end and its rear end and which are defined for said position T (the set $L3_T$ being thus defined for said position T), wherein the guided vehicle is taken as frame of reference for defining said internal positions. In the following, $X_F$ will be the position of the front end of the guided vehicle, and $X_R$ the position of its rear end, with $|X_F - X_R| = L$, i.e. the guided vehicle length L. Of course, the positions $X_F$ and $X_R$ change when the guided vehicle is moving along said route, said set $L3_T$ comprising internal positions comprised between $X_F$ and $X_R$ and defined for the guided vehicle being at the position T, i.e. when the front end of the guided vehicle is at the position T. For determining said set $L3_T$, the processing unit is notably configured for:

- determining a first set $L1_{X0}$ of internal positions $X^{in-tern\_1, X_0}$ located along the length of the guided vehicle, between the front end position $X_F$ of the guided vehicle and its rear end position $X_R$, which, when said front end of the guided vehicle is located at the final position $X_0$, i.e. $X_F = X_0$, correspond each to (i.e. are located each at the same position as) one of said remarkable positions $P_j$;
- determining a second set $L2_T$ of guided vehicle internal positions $X^{intern\_2, T}$ located, along the length of the guided vehicle, between $X_F$ and $X_R$, which, when the front end of the guided vehicle is located at the position T, e.g. $T = X_F = X$, correspond each to one of said remarkable positions $P_j$;
- creating the set $L3_T$ as the union of $L1_{X0}$ and $L2_T$, wherein $L3_T$ further comprises the positions $X_F = T$ and $X_R$, and optionally, other internal positions located between $X_F$ and $X_R$, wherein, for simplicity, $L3_T$ is written as $L3_T = \{X_R, \{X^{intern\_1, X0}\}, \{X^{intern\_2, T}\}, X_F\} = \{X_{T\_int, f}\}$ with $f = 1,...,U_T$, $U_T$ being equal to the number of positions (or elements) comprised within $L3_T$ for the position T, and wherein, for simplicity, the positions $X_{T\_int, f}$ are ordered from the most distant position from $X_F$ to the closest position to $X_F$ with decreasing f, that is $X_{T\_int, UT} = X_R, X_{T\_int, UT-1},..., X_{T\_int, 2}$, $X_{T\_int, 1} = X_F$. Such internal positions are illustrated in Fig. 3 and **4.** Advantageously said other internal positions enable to better take into account the length of the guided vehicle when calculating the speed limit. Indeed, adding such other internal positions may reduce a gap between an optimal speed limit and the calculated speed limit, given that the present invention aims to find a value for said speed limit that tends to the value of said optimal speed limit. In particular, such other internal positions are added to $L3_T$ if a distance between two directly neighboring remarkable positions that are located "below" the guided vehicle when it is located at a considered position (e.g. when its front end is located at the position X) is larger than a predefined distance chosen in function of the guided vehicle length, e.g. larger than $L/2$ or $L/3$.

In particular, the processing unit is further configured for automatically adding, to said set S of remarkable positions, for each internal position $X_{T\_int,f}$ comprised in $L3_T$, a first position (i.e. an additional remarkable position) along said route that corresponds to (i.e. is located along said route at a same place as) said internal position $X_{T\_int,f}$ when the front end of the guided vehicle is located in $X_0$ and a second position (i.e. another additional remarkable position) along said route that corresponds to said internal position $X_{T\_int,f}$ when said front end is located in T, if such first position, respectively second position, is not yet comprised within S.

In other words, said first and second positions are only added to the set S if they are not yet comprised in said set S, otherwise, they are ignored, i.e. not added to the set, so that duplicates are avoided.

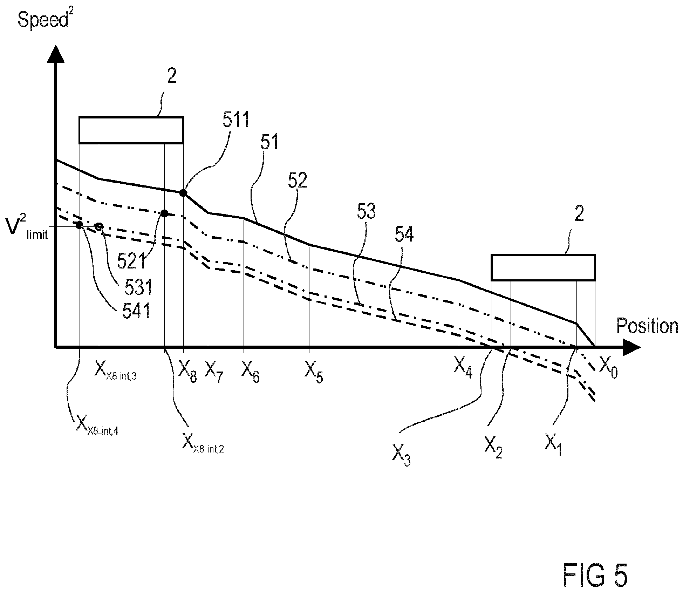

These added remarkable positions enable to determine an optimized value of the speed limit $V_{limit}$ by taking into account the length L of the guided vehicle and potential changes of adhesion conditions that may take place at positions located below the guided vehicle when the latter is located at the position T. This is notably illustrated by Fig. 5, wherein the guided vehicle 2 is schematically represented by a rectangle. Indeed, critical situations may occur, wherein along the length L of the guided vehicle, some internal positions may require a more restrictive speed limit that the one that might be calculated by assigning to the guided vehicle a single position being for instance $X_F$. Therefore, the present invention proposes to take into account the length of the guided vehicle by determining whether there exists a position, located between the front end and the rear end of the guided vehicle, and for which of the speed limit $V_{limit}$ determined for said position would be more restrictive than the speed limit calculated for any other position between said front end and rear end. This will be better explained in the following.

Preferably, according to the present invention, the method comprises, and the processing unit is configured for, automatically calculating the speed limit $V_{limit}$ by implementing an iterative calculation process. As explained earlier, when the guided vehicle is moving on said network, it follows a route that has been defined in advance, and therefore the itinerary followed by the guided vehicle on said network is known. Said iterative calculation process is configured for calculating the speed limit $V_{limit}$ for the position X of the guided vehicle from the speed $V_0$ required at the final position $X_0$ and by iteratively calculating, for each remarkable position between X and $X_0$ that is encountered when going from $X_0$ to X along the route followed by the guided vehicle, the speed that is required at a next remarkable position (when going from $X_0$ to X) for satisfying the speed obtained for a previous remarkable position (when going from $X_0$ to X) when applying an emergency braking according to the concerned EBR function. In particular, the iterative calculation process comprises, according to the present invention:

- an automatic determination of a subset S' of said set S of remarkable positions $P_j$ comprised along a section of said route defined for the guided vehicle, wherein said section of route is comprised between the position X of the guided vehicle (i.e. its current position, which is the position on the network where the guided vehicle is located when it performs said iterative calculation process for determining said speed limit $V_{limit}$) and the final position $X_0$ to be reached by the guided vehicle when moving along said section of route from the current position X towards the final position $X_0$ according to said given travel direction. The speed of the guided vehicle at said final position is the final speed $V_0$ that is a predefined parameter. For instance, the final position might be one of said remarkable positions $P_j$ that is of type III, in which case the final speed $V_0$ might be a speed constraint imposed to the guided vehicle at said final position. Typically, the subset S' may comprise N of said remarkable positions $P_j$, which, for simplicity, are ordered in the set S' according to increasing distance from the final position $X_0$ (said distance being measured along said section of route) and noted $X_1,...,X_N$ with $N \leq M$, i.e. $S'=\{X_{j'}\}$ with $j'=1,...,N$, wherein $X_1$ is the remarkable position $P_j$ of the subset S' that is the closest to the final position $X_0$ on said section of route, and $X_N$ is the remarkable position $P_j$ of S' that is the closest to the position X of the guided vehicle, wherein $X_{N+1}$ is set to be equal to X (i.e. $X=X_{N+1}$). Such an ordering of the remarkable positions $P_j$ in the subset S' is of course optional, but it simplifies here the description of the concept according to the invention. Given said ordering, $X_1,...,X_N$ are thus remarkable positions of the network 100 that correspond to the remarkable positions $P_j$ of the set S that are located on said section of route between X and $X_0$, and ordered along said section of route according to decreasing value of j' when moving from X to $X_0$, the guided vehicle successively encountering therefore $X_N, X_{N-1}, ..., X_{j'}, ..., X_1$, when moving from X to $X_0$, N being the number of remarkable positions $X_j$, within said subset S'. In particular, $X_{N+1}, X_N, ..., X_{j'}, ..., X_1$ might be positions defined with respect to $X_0$ taken as reference position, representing for instance each a distance measured from $X_0$ along said section of route, i.e. the distance separating the considered remarkable position $X_j$, from $X_0$;

- iteratively calculating, for i=0,...,N, a speed $V_{i+1}$ at a position $X_{i+1}$ according to:

$$V^2{}_{i+1} \ = \ V^2(X_i, X_{i+1}, V_i) =$$
$$V^2{}_i + [2 \cdot \gamma^{EBR,Xi}(V_i) + M(X_i) \cdot g \cdot \texttt{gradient}(X_i)] \cdot (X_{i+1} - X_i)$$

(Eq. 1)

wherein

$X_{i+1}$ is, when starting from the final position $X_0$ and following said section of route towards (in direction of) the position X, the remarkable position of said subset S' that is encountered on said section of route after the position $X_i$ (i.e. that is directly next to the position $X_i$ along said route when starting from the final position $X_0$ and moving along said route towards the position X);

$\gamma^{EBR,Xi}(V_i)$ is the emergency brake rate value (i.e. deceleration rate) at the position $X_i$ for the speed $V_i$: $\gamma^{EBR,Xi}(V_i) = \gamma^{Xi,Vi}$. In particular, if $X_0$ is not one of said remarkable positions, then if $X_0$ is located, along said route, between the remarkable position $X_1$ and a remarkable position $X_a$ of the set S ($X_1$ and $X_a$ being direct neighbors to the position $X_0$), then $\gamma^{EBR,X0}(V_0) = \gamma^{EBR,Xa}(V=V_0) = \gamma^{Xa,V0}$;

g is the gravity, i.e. g=9.81m/s²;

gradient $(X_i) = [h(X_i)-h(X_{i+1})]/(X_i-X_{+1})$, wherein $h(X_i)$ is the height at the position $X_i$;

$M(X_i) = M_e/(M_e+M_{in})$ if gradient $(X_i)>0$, otherwise, if gradient $(X_i) \leq 0$, then $M(X_i) = M_f/(M_f+M_{in})$, wherein $M_e$ is the mass of the guided vehicle when it is empty, $M_f$ is the mass of the guided vehicle comprising a load (e.g. passengers), and $M_{in}$ is the inertial mass of the guided vehicle;

and wherein the processing unit is configured for automatically setting the speed limit value of $V_{limit}$ as $V_{limit} = V_{N+1}$. In other words, the EB system according to the invention is able to calculate, notably thanks to said EBR function, a speed limit that will take into account variations of the adhesion along the route it has to follow for reaching the final position. Said iterative calculation typically gives rise to a curve as schematically represented by the continuous line 51 in Fig. 5, which shows the calculated speed $V^2{}_{i+1}$ for different remarkable positions $X_{i+1}$.

Preferentially, the processing unit according to the invention is further configured for, and the method comprises, at each iteration, automatically testing whether the emergency brake rate value changes between $X_{i+1}$ and $X_i$ when considering the calculated speed $V_{i+1}$. For instance, if $\gamma^{EBR,Xi}(V)$ is a piecewise constant function as described earlier in connection with Figure 2, wherein said piecewise constant function takes constant values on successive speed intervals

according to $\gamma^{EBR,Xi}(V) = \gamma^{X_i,V_t^{EB,X_i}} = \texttt{constant\_t}$ if $V_{t-1}^{EB,Pj} \leq V < V_t^{EB,Pj}$, then such a piecewise constant function comprises speed intervals like $[V_1^{EB,x_i}, \ V_2^{EB,x_i}[, \ [V_2^{EB,x_i}, \ V_3^{EB,x_i}[, ..., [V_{t-1}^{EB,x_i}, \ V_t^{EB,x_i}[, \ [V_t^{EB,x_i}, V_{t+1}^{EB,x_i}[, ..., [V_{Q-1}^{EB,x_i}, \ V_Q^{EB,x_i}[$,

wherein $V_{t-1}^{EB,x_i}$ and $V_t^{EB,x_i}$ are emergency brake speed values representing the boundaries of the t$^{th}$ speed interval, and wherein the constant values $\gamma^{X_i,V_t^{EB,X_i}}$ obtained for t=1,...,Q are preferentially each different (see for instance the line segments 220 of the piecewise constant function illustrated in Fig. 2). Typically, if $V_0$ belongs to a speed interval associated to a first A of said line segments 220 and thus to a first value of the EBR function, and the next calculated speed according to the iteration, which is then $V_1$ ($V_1$ being greater than $V_0$), does not belong to said first line segment but for instance to a third C line segment 220 associated to a third value of the EBR function, this means that for each change of the EBR function value that takes place between the first value and the third value, one has to determine the position that corresponds to the speed at which said change takes place. In the current example, the position corresponding to the speed $V^{EB,Pj}_{Q-1}$ and the position corresponding to the speed $V^{EB,Pj}_{Q-2}$ have thus to be determined. This enables to take into account variations of the EBR function due to changes of guided vehicle speed.

The above-mentioned testing is typically implemented by the processing unit, e.g. its processor, by executing instructions that might be comprised in the memory of the EB system. In particular, in the case of the EBR function being a piecewise constant function, then said testing comprises:

- defining a parameter k whose value is configured for being iteratively increased by 1 unit;
- defining an intermediate position $X_{i,k}$ and an intermediate speed $V_{i,x}$, and setting initially $X_{i,k} = X_i$ and $V_{i,k} = V_i$;
- setting an initial value of the parameter k to 0, i.e. k=0;

said testing further comprising the following testing steps:

- determining whether $\gamma^{EBR,Xi,k}(V_{i+1}) = \gamma^{EBR,Xi,k}(V_{i,k})$; and if yes, then continuing the iteration process

wherein i is incremented by one unit (i.e. i = i+1), otherwise

(i) determining the speed interval to which $V_{i,k}$ belongs to, i.e. for which value S taken by t one has

$$V_S^{EB,x_i} \leq V_{i,k} < V_{S+1}^{EB,x_i} \text{ and setting an emergency brake speed value } V^{EB,Xi,k} = V_{S+1}^{EB,x_i}$$

(ii) determining a next intermediate position $X_{i,k+1}$ according to

$$X_{i,k+1} = X_{i,k} + ((V^{EB,Xi,k})^2 - V^2_{i,k})/[2 \cdot \gamma^{EBR,Xi,k}(V_{i,k}) + M(X_{i,k}) \cdot g \cdot gradient(X_{i,k})]$$

(iii) setting $V^2_{i,k+1} = (V^{EB,Xi,k})^2$;
(iv) setting $V^2_{i+1} = V^2(X_{i,k+1}, X_{i+1}, V_{i,t+1})$;
(v) incrementing k by one unit;

and repeating the testing steps.

According to a first preferred embodiment, the method comprises, and the processing unit is further configured for, automatically determining, for each remarkable position of the set S' to which a speed constraint is assigned to, i.e. for each remarkable positions of type III of the set S', whether the speed $V_{i+1}$ calculated for said remarkable position of type III is greater than the speed constraint associated to said remarkable position of type III, and in the affirmative, then the processing unit is configured for setting $X_0$ equal to said remarkable position of type III and $V_0$ equal to said speed constraint, and for restarting anew said iterative calculation process over i, otherwise ignoring said speed constraint and continuing the iteration over i. This enables the EB system to check that the newly calculated speed $V_{i+1}$ at a remarkable position to which a speed constraint is assigned to satisfies the speed constraint imposed at said remarkable position.

According to a second preferred embodiment, at each iteration and after said testing, the method comprises, and the processing unit is further configured for, automatically performing another testing configured for determining whether a speed constraint $V_{constraint\,speed}$ applying to (i.e. that has to be satisfied by) the guided vehicle at a position $X_{constraint\,speed}$ comprised between $X_R$ and $X_F = X_{i+1}$ would be more restrictive than $V_{i+1}$, and, in the affirmative, setting $X_0 = X_{constraint\,speed}$ and $V_0 = V_{constraint\,speed}$, and restarting anew the iterative calculation process over i, otherwise, ignoring said speed constraint, and continuing the iteration over i. Advantageously, this enables the EB system to take into account the guided vehicle length and a potential speed constraint or restriction applying at a position along said length of the guided vehicle when its front is located in $X_F = X_{i+1}$.

Preferentially, for performing said another testing, the method comprises, and the processing unit is further configured for, as long as i≤N-1

- iteratively calculating, for c=1,...,$U_{X_{i+1}}$ -1 a speed $V_{X_i}+1\_int,c+1$ at a position $X_{X_i}+1\_int,c+1$ according to:

$$V^2_{X_{i+1}\_int,c+1} = V^2(X_{X_{i+1}\_int,c}, X_{X_{i+1}\_int,c+1}, V_{X_{i+1}\_int,c}) = V^2_{X_{i+1}\_int,c} + [2 \cdot \gamma^{EBR,X_{X_{i+1}\_int,c}}(V_{X_{i+1}\_int,c}) + M(X_{X_{i+1}\_int,c}) \cdot g \cdot gradient(X_{X_{i+1}\_int,c})] \cdot (X_{X_{i+1}_{int},c+1} - X_{X_{i+1}\_int,c})$$

wherein
$$V_{X_{i+1}\_int,1} = V_{i+1} \text{ and } X_{X_{i+1}\_int,1} = X_{i+1};$$

- optionally, repeating said testing steps described previously with respect to the iteration over c, i.e. wherein at each iteration over c, the processing unit is configured for automatically testing whether the emergency brake rate value changes between $X_{X_i}+1\_int,c+1$ and $X_{X_{i}+1_{int},c}$ when considering the calculated speed $V_{X_i}+1\_int,c+1$;
- determining for which value C' of c'=0,...,$U_{X_{i+1}}$ - 1, the expression $(V^2_{X_{i+1}\_int,c'+1} - V^2_{c'}) + V^2_0$ reaches a minimum value, and
- if said minimum value is smaller than $V^2_{constraint\,speed}$, then ignoring said speed constraint and continuing the iteration over i, otherwise setting $X_0 = X_{i+1}$ and $V_0 = V_{constraint\,speed}$ and restarting anew the iterative calculation process over i.

As defined earlier, "$U_{X_{i+1}}$" is equal to the number of positions (or elements) comprised within the set $L3_{X_{i+1}}$ of

internal positions defined for the guided vehicle being at the position $X_{i+1}$. In other words, for performing said another testing, the processing unit preferentially determines iteratively, for each internal position comprised in the set $L3_{Xi+1}$ that are located between the front end and rear end of the guided vehicle when considering its front end located in position $X_{i+1}$, the speed associated to the concerned internal position by solving Eq. 1 for said concerned internal position, and then it determines if the minimum speed value obtained among the different speeds calculated for said internal positions is smaller than said speed constraint. In the affirmative, the iteration over i can continue, otherwise, the iteration over i has to restart by taking into account the more restrictive speed constraint.

In particular, at the end of the iteration, i.e. for i=N, the method comprises, and the processing unit is further configured for, setting $X_F = X$, and for automatically determining if, between the position $X_F = X$ and said position $X_R$, there is any internal position $X_{intern\_Vlim}$ requiring a lower value of said speed limit $V_{limit}$ than the speed limit value obtained as $V_{limit} = V_{N+1}$ (when $X_F = X$), and, in the affirmative, for setting the value of $V_{limit}$ equal to said lower value. This is better illustrated by Figure 5, wherein the set of internal positions is $L3_{X_8} = \{X_8 = X_{X_8\_int,1}, X_{X_8\_int,2}, X_{X_8\_int,3}, X_{X_8\_int,4}\}$ wherein $U_{X_8} = 4$. For each of said internal positions, the speed is calculated (see "Speed$^2$", i.e. the speed raised to the power of two, used for the ordinate of the graphic shown in Fig. 5), and it is determined whether the speed calculated for an internal position is more restrictive than the other speeds calculated for said internal positions. The more restrictive speed is then taken as the speed limit $V_{limit}$ 531. In Fig. 5, the different curves 51-54 are each obtained by solving Eq. 1 for $X=X_8$ while imposing the speed $V_0$ at one of said internal positions of the guided vehicle when the latter is located in $X_0$. This enables to determine, when the guided vehicle is located in $X=X_8$, whether one of said speeds associated to an internal position and that is obtained via Eq. 1, i.e. corresponding to references 511, 521, 531, 541 in Fig. 5, is more restrictive than the other and to fix the speed limit $V_{limit}$ as equal to the more restrictive speed, which would correspond to reference 521 in the case illustrated by Fig. 5.

Preferentially, for determining $X_{intern\_Vlim}$, the processing unit is configured for:

- iteratively calculating, for c=1,...,$U_{X_{N+1}}$-1, a speed $V_{X_N}+1\_int,c+1$ at a position $X_{X_N}+1\_int,c+1$ according to:

$$V^2_{X_{N+1}\_int,c+1} = \mathrm{V}^2(X_{X_{N+1}\_int,c}, X_{X_{N+1}\_int,c+1}, V_{X_{N+1}\_int,c}) = V^2_{X_{N+1}\_int,c} + [2 \cdot \gamma^{EBR,X_{X_{N+1}\_int,c}}(V_{X_{N+1}\_int,c}) + \mathrm{M}(X_{X_{N+1}\_int,c}) \cdot \mathrm{g} \cdot \mathrm{gradient}(X_{X_{N+1}\_int,c})] \cdot (X_{X_{N+1_{int}},c+1} - X_{X_{N+1}\_int,c})$$

wherein
$V_{X_{N+1}\_int,1} = = V_{N+1}$ and $X_{X_{N+1}\_int,1} = X_{N+1}$;
- optionally, repeating said testing steps previously described with respect to the iteration over c, i.e. wherein at each iteration over c, the processing unit is configured for automatically testing whether the emergency brake rate value changes between $X_{X_N}+1\_int,c+1$ and $X_{X_N}+1\_int,c$ when considering the calculated speed $V_{X_N}+1\_int,c+1$;
- determining for which value C" of c"=0,...,$U_{X_{i+1}}$-1, the expression $(V^2_{X_{N+1}\_int,c"+1} - V^2_{c"}) + V^2_0$ reaches a minimum value, and
- if said minimum value is smaller than $V^2_{N+1}$, then setting the value of $V_{limit}$ equal to sqrt $(V^2_{X_{N+1}\_int,C"+1})$ wherein $X_{intern\_Vlim} = X_{N+1\_int,C"+1}$, otherwise, keeping $V_{limit}$ equal to $V_{N+1}$.

Preferentially, the method comprises, and the processing unit of the EB system is further configured for, taking into account an altitude error when calculating the speed limit $V_{limit}$. For instance, it might be configured for automatically lowering the value of $V_{limit}$ by an amount calculated in function of an altitude error $h_\varepsilon$ in order to obtain a final value for $V_{limit}$ that is equal to sqrt $(V^2_{limit} - 2 \cdot g \cdot M_f/(M_f+M_{in}) \cdot h_\varepsilon)$.

To summarize, the present invention proposes a new system and method capable to better adjust the speed limit used to trigger an emergency braking of a guided vehicle to the real distance required for braking the guided vehicle so that a safe distance (e.g. between the guided vehicle and another guided vehicle, or between the guided vehicle and a relevant position like a station) can be kept during the moving of the guided vehicle in case of an activation of the emergency braking. This is made possible by the new system and method according to the invention that use a variable emergency brake rate (said EBR function) as a function of speed of the guided vehicle in addition to, optionally, variations due to track or route gradient, and/or track or route conditions, and/or guided vehicle types (e.g. each type being characterized by a different length).

**Claims**

1. System (1) for initiating an emergency braking of a guided vehicle (2), said system (1) being configured for cooperating with a braking system (21) of the guided vehicle (2), said system (1) comprising:

- a processing unit (11) configured for initiating said emergency braking if it detects that a guided vehicle speed V at a guided vehicle position X exceeds a speed limit $V_{limit}$ defined for said position X in order to ensure a speed $V_0$ at a final position $X_0$ located upfront the guided vehicle (2) on a route followed by said guided vehicle (2);

the system (1) being **characterized in that** said processing unit (11) is configured for automatically determining the speed limit $V_{limit}$ for said position X from an emergency brake rate function which varies in function of the guided vehicle speed at a remarkable position $P_j$.

2. System (1) according to claim 1, comprising a memory (12) storing

- a set S of said remarkable positions $P_j$ with j=1,...,M, i.e. S = $\{P_1,...,P_M\}$ with M $\geq$ 1, along the route that has to be followed by the guided vehicle; and,
- for each remarkable position $P_j$, an emergency brake rate $\gamma^{EBR,Pj}(V)$ that is a function of the speed V of the guided vehicle at said remarkable position $P_j$, i.e. $\gamma^{EBR,Pj}(V)=\gamma^{Pj,v}$.

3. System (1) according to claim 2, wherein the processing unit is configured for automatically determining, for a position T along said route, a set $L3_T$ of guided vehicle internal positions that are located within the guided vehicle between its front end and its rear end, wherein, in the following, $X_F$ is the position of the front end of the guided vehicle, and $X_R$ is the position of its rear end, with $|X_F\text{-}X_R|$ = L, i.e. the guided vehicle length L, the processing unit being configured for:

- determining a first set $L1_{X0}$ of internal positions $X^{in\text{-}tern\_1,X0}$ located along the length of the guided vehicle, between the front end position $X_F$ of the guided vehicle and its rear end position $X_R$, which, when said front end of the guided vehicle is located at the final position $X_0$, i.e. $X_F = X_0$, correspond each to one of said remarkable positions $P_j$;
- determining a second set $L2_T$ of guided vehicle internal positions $X^{intern\_2,T}$ located, along the length of the guided vehicle, between $X_F$ and $X_R$, which, when the front end of the guided vehicle is located at the position T, e.g. T=$X_F$=X, correspond each to one of said remarkable positions $P_j$;
- creating said set $L3_T$ as the union of $L1_{X0}$ and $L2_T$, wherein $L3_T$ further comprises the positions $X_F = T$ and $X_R$, wherein, for simplicity, $L3_T$ is written as $L3_T$=$\{X_{T\_int,f}\}$ with f=1,...,$U_T$, $U_T$ being equal to the number of positions comprised within $L3_T$ for the position T, and wherein, for simplicity, the positions $X_{T\_int,f}$ are ordered from the most distant position from $X_F$ to the closest position to $X_F$ with decreasing f, that is $X_{T\_int,UT}$=$X_R$,$X_{T\_int,UT-1}$,...,$X_{T\_int,2}$, $X_{T\_int,1}$=$X_F$;

wherein the processing unit is further configured for automatically adding, to said set S of remarkable positions, for each internal position $X_{T\_int,f}$ comprised in $L3_T$, a first position that corresponds to said internal position $X_{T\_int,f}$ when the front end of the guided vehicle is located in $X_0$ and a second position that corresponds to said internal position $X_{T\_int,f}$ when said front end is located in T, if such first position, respectively second position, is not yet comprised within S.

4. System (1) according to claim 2 or 3, wherein the processing unit (11) is configured for automatically calculating the speed limit $V_{limit}$ by implementing an iterative calculation process, wherein said iterative calculation process comprises:

- an automatic determination of a subset S' of said set S of remarkable positions $P_j$ comprised along a section of said route defined for the guided vehicle (2), wherein said section of route is comprised between the current position X of the guided vehicle and the final position $X_0$, wherein the speed of the guided vehicle at said final position is the final speed $V_0$ that is a predefined parameter, wherein the subset S' comprises N of said remarkable positions $P_j$, which, for simplicity, are ordered in the set S' according to increasing distance from the final position $X_0$ and noted $X_1,...,X_N$ with N$\leq$M, i.e. S'=$\{X_{j'}\}$ with j'=1,...,N;
- iteratively calculating, for i=0,...,N, a speed $V_{i+1}$ at a position $X_{i+1}$ according to:

$$V^2{}_{i+1} \ = \ V^2(X_i,X_{i+1},V_i) =$$
$$V^2{}_i+[2 \cdot \gamma^{EBR,Xi}(V_i)+M(X_i) \cdot g \cdot gradient(X_i)] \cdot (X_{i+1}-X_i)$$
$$(Eq. \ 1)$$

wherein

$X_{i+1}$ is, when starting from the final position $X_0$ and following said section of route towards the position X, the remarkable position of said subset S' that is encountered on said section of route after the position $X_i$;

$\gamma^{EBR,Xi}(V_i)$ is the emergency brake rate value at the position $X_i$ for the speed $V_i$: $\gamma^{EBR,Xi}(V_i) = \gamma^{Xi,vi}$;

g is the gravity, i.e. $g = 9.81 m/s^2$;

gradient $(X_i) = [h(X_i)-h(X_{i+1})]/(X_i-X_{i+1})$, wherein $h(X_i)$ is the height at the position $X_i$;

$M(X_i) = M_e/(M_e+M_{in})$ if gradient $(X_i)>0$, otherwise, if gradient $(X_i) \leq 0$, then $M(X_i) = M_f/(M_f+M_{in})$, wherein $M_e$ is the mass of the guided vehicle when it is empty, $M_f$ is the mass of the guided vehicle comprising a load, and $M_{in}$ is the inertial mass of the guided vehicle;

the processing unit being configured for automatically setting the speed limit value of $V_{limit}$ as $V_{limit} = V_{N+1}$.

5. System according to claim 4, wherein, at each iteration, the processing unit is configured for automatically testing whether the emergency brake rate value changes between $X_{i+1}$ and $X_i$ when considering the calculated speed $V_{i+1}$.

6. System according to claim 5, wherein $\gamma^{EBR,Xi}(V)$ is a piecewise constant function taking constant values on successive speed intervals according to $\gamma^{EBR,Xi}(V) = \gamma^{X_i,V_t^{EB,X_i}} = \text{constant\_t}$ if $V_{t-1}^{EB,x_i} \leq V < V_t^{EB,x_i}$, with t=1,...,Q, Q≥2 being the number of speed intervals, Q and t being positive integers;

wherein said testing comprises:

- defining a parameter k whose value is configured for being iteratively increased by 1 unit;
- defining an intermediate position $X_{i,k}$ and an intermediate speed $V_{i,k}$, and setting initially $X_{i,k} = X_i$ and $V_{i,k} = V_i$;
- setting an initial value of the parameter k to 0, i.e. k=0;

said testing further comprising the following testing steps:

- determining whether $\gamma^{EBR,Xi,k}(V_{i+1}) = \gamma^{EBR,Xi,k}(V_{i,k})$; and

if yes, then continuing the iteration process wherein i is incremented by one unit (i = i+1), otherwise

(i) determining the speed interval to which $V_{i,k}$ belongs to, i.e. for which value S taken by t one has $V^{EB,Xi}_S \leq V_{i,k}$ $V^{EB,Xi}_{S+1}$ and setting an emergency brake speed value $V^{EB,Xi,k} = V^{EB,Xi}_{S+1}$

(ii) determining a next intermediate position $X_{i,k+1}$ according to

$$X_{i,k+1} = X_{i,k} + ((V^{EB,Xi,k})^2 - V^2_{i,k}) / [2 \cdot \gamma^{EBR,Xi,k}(V_{i,k}) + M(X_{i,k}) \cdot g \cdot \text{gradient}(X_{i,k})]$$

(iii) setting $V^2_{i,k+1} = (V^{EB,Xi,k})^2$;
(iv) setting $V^2_{i+1} = V^2(X_{i,k+1}, X_{i+1}, V_{i,k+1})$;
(v) incrementing k by one unit;

and repeating the testing steps.

7. System according to one of the claims 4-6, wherein for each remarkable position that belongs to the set S' and to which a speed constraint is associated to, the processing unit is configured for automatically determining whether the speed $V_{i+1}$ calculated for said remarkable position is greater than the speed constraint associated to said remarkable position, and in the affirmative, then the processing unit is configured for setting $X_0$ equal to said remarkable position and $V_0$ equal to said speed constraint, and for restarting anew said iterative calculation process over i, otherwise ignoring said speed constraint and continuing the iteration over i.

8. System according to claim 5 or 6, wherein, at each iteration and after said testing, the processing unit is further configured for automatically performing another testing configured for determining whether a speed constraint $V_{constraint\ speed}$ applying to the guided vehicle at a position $X_{constraint\ speed}$ comprised between $X_R$ and $X_F = X_{i+1}$ would be more restrictive than $Vi_{+1}$, and, in the affirmative, setting $X_0 = X_{constraint\ speed}$ and $V_0 = V_{constraint\ speed}$ and restarting anew the iterative calculation process over i, otherwise, ignoring said speed constraint, and continuing the iteration over i.

9. System according to claims 3 and 8, wherein for performing said another testing, the processing unit is configured for, as long as $i \leq N-1$:

- iteratively calculating, for $c=1,...,U_{Xi+1}-1$, a speed $V_{Xi+1\_int,c+1}$ at a position $X_{Xi+1\_int,c+1}$ according to:

$$V^2_{Xi+1\_int,c+1} = V^2(X_{Xi+1\_int,c}, X_{Xi+1\_int,c+1}, V_{Xi+1\_int,c}) =$$
$$V^2_{Xi+1\_int,c} + [2 \cdot \gamma^{EBR,X_{Xi+1\_int,c}}(V_{Xi+1\_int,c}) + M(X_{Xi+1\_int,c}) \cdot g \cdot \mathrm{gradient}(X_{Xi+1\_int,c})] \cdot (X_{Xi+1\_int,c+1} - X_{Xi+1\_int,c})$$

wherein
$V_{Xi+1\_int,1} = V_{i+1}$ and $X_{Xi+1\_int,1} = X_{i+1}$;
- optionally, repeating said testing steps according to claim 5 or 6 with respect to the iteration over c, i.e. wherein at each iteration over c, the processing unit is configured for automatically testing whether the emergency brake rate value changes between $X_{Xi+1\_int,c+1}$ and $X_{Xi+1\_int,c}$ when considering the calculated speed $V_{Xi+1\_int,c+1}$;
- determining for which value C' of $c'=0,...,U_{Xi+1}-1$, the expression $(V^2_{Xi+1\_int,c'+1} - V^2_{c'}) + V^2_0$ reaches a minimum value, and
- if said minimum value is smaller than $V^2_{constraint\ speeds}$, then ignoring said speed constraint and continuing the iteration over i, otherwise setting $X_0 = X_{i+1}$ and $V_0 = V_{constraint\ speed}$ and restarting anew the iterative calculation process over i.

10. System according to one of the claims 4 to 9, wherein, at the end of the iteration, i.e. for i=N, the processing unit is further configured for setting $X_F = X$, and for automatically determining if, between the position $X_F = X$ and said position $X_R$, there is any internal position $X_{intern\_Vlim}$ requiring a lower value of said speed limit $V_{limit}$ than the speed limit value obtained as $V_{limit} = V_{N+1}$, and, in the affirmative, for setting the value of $V_{limit}$ equal to said lower value.

11. System according to claim 3 and 10, wherein, for determining $X_{intern\_Vlim}$, the processing unit is configured for

- iteratively calculating, for $c=1,...,U_{XN+1}-1$, a speed $V_{XN+1\_int,c+1}$ at a position $X_{XN+1\_int,c+1}$ according to:

$$V^2_{XN+1\_int,c+1} = V^2(X_{XN+1\_int,c}, X_{XN+1\_int,c+1}, V_{XN+1\_int,c}) =$$
$$V^2_{XN+1\_int,c} + [2 \cdot \gamma^{EBR,X_{XN+1\_int,c}}(V_{XN+1\_int,c}) + M(X_{XN+1\_int,c}) \cdot g \cdot \mathrm{gradient}(X_{XN+1\_int,c})] \cdot (X_{XN+1\_int,c+1} - X_{XN+1\_int,c})$$

wherein
$V_{XN+1\_int,1} = V_{N+1}$ and $X_{XN+1\_int,1} = X_{N+1}$;
- optionally, repeating said testing steps according to claim 5 or 6 with respect to the iteration over c, i.e. wherein at each iteration over c, the processing unit is configured for automatically testing whether the emergency brake rate value changes between $X_{XN+1\_int,c+1}$ and $X_{XN+1\_int,c}$ when considering the calculated speed $V_{XN+1\_int,c+1}$;
- determining for which value C" of $c''=0,...,U_{Xi+1}-1$, the expression $(V^2_{XN+1\_int,c''+1} - V^2_{c''}) + V^2_0$ reaches a minimum value, and
- if said minimum value is smaller than $V^2_{N+1}$, then setting the value of $V_{limit}$ equal to sqrt $(V^2_{XN+1\_int,C''+1})$, otherwise, keeping $V_{limit}$ equal to $V_{N+1}$.

12. System according to claim 11, wherein the processing unit is configured for automatically taking into account an altitude error when calculating said speed limit $V_{limit}$.

13. Method for initiating an emergency braking of a guided vehicle (2) by means of a system (1) configured for cooperating with a braking system (21) of the guided vehicle (2), the method comprising:

- determining whether a guided vehicle speed V at a guided vehicle position X exceeds a speed limit $V_{limit}$ defined for said position X for said guided vehicle (2);
- initiating said emergency braking if the guided vehicle speed V at the guided vehicle position X exceeds the speed limit $V_{limit}$ in order to ensure, for said guided vehicle, a speed $V_0$ at a final position $X_0$ located upfront the

guided vehicle (2) on a route followed by said guided vehicle (2);

the method being **characterized in that** it comprises:

- automatically determining the speed limit $V_{limit}$ for said position X from an emergency brake rate function which, for a given remarkable position $P_j$, varies in function the guided vehicle speed at said remarkable position $P_j$.

14. The method according to claim 13, comprising storing, in a memory (12) of said system (1)

- a set S of said remarkable positions $P_j$ with j=1,...,M, i.e. S = {$P_1$,...,$P_M$} with M $\geq$ 1, along the route that has to be followed by the guided vehicle; and,
- for each remarkable position $P_j$, an emergency brake rate $\gamma^{EBR,Pj}$ that is a function of the speed V of the guided vehicle at said remarkable position $P_j$, i.e. $\gamma^{EBR,Pj}(V) = \gamma^{Pj,V}$.

15. Method according to claim 14, comprising automatically calculating the speed limit $V_{limit}$ by implementing an iterative calculation process, wherein said iterative calculation process comprises:

- an automatic determination of a subset S' of said set S of remarkable positions $P_j$ comprised along a section of said route defined for the guided vehicle, wherein said section of route is comprised between the current position X of the guided vehicle and the final position $X_0$ to be reached by the guided vehicle when moving along said section of route from the current position X towards the final position $X_0$ according to a given travel direction, wherein the speed of the guided vehicle (2) at said final position is the final speed $V_0$ that is a predefined parameter, wherein the subset S' comprises N of said remarkable positions $P_j$, which, for simplicity, are ordered in the set S' according to increasing distance from the final position $X_0$ and noted $X_1$,...,$X_N$ with N$\leq$M, i.e. S'={$X_{j'}$} with j'=1,...,N;
- iteratively calculating, for i=0,...,N, a speed $V_{i+1}$ at a position $X_{i+1}$ according to:

$$\mathtt{V^2_{i+1} \;=\; V^2(X_i,X_{i+1},V_i) =}$$
$$\mathtt{V^2_i + [2 \cdot \gamma^{EBR,Xi}(V_i) + M(X_i) \cdot g \cdot gradient(X_i)] \cdot (X_{i+1} - X_i)}$$
$$\mathtt{(Eq. \; 1)}$$

wherein

$X_{i+1}$ is, when starting from the final position $X_0$ and following said section of route towards the position X, the remarkable position of said subset S' that is encountered on said section of route after the position $X_i$;
$\gamma^{EBR,Xi}(V_i)$ is the emergency brake rate value at the position $X_i$ for the speed $V_i$: $\gamma^{EBR,Xi}(V_i) = \gamma^{Xi,Vi}$;
g is the gravity, i.e. g=9.81m/s$^2$;
gradient $(X_i) = [h(X_i)-h(X_{i+1})]/(X_i-X_{i+1})$, wherein $h(X_i)$ is the height at the position $X_i$;
$M(X_i) = M_e/(M_e+M_{in})$ if gradient $(X_i)>0$, otherwise, if gradient $(X_i) \leq 0$, then $M(X_i) = M_f/(M_f+M_{in})$, wherein $M_e$ is the mass of the guided vehicle when it is empty, $M_f$ is the mass of the guided vehicle comprising a load, and $M_{in}$ is the inertial mass of the guided vehicle;

and automatically setting the speed limit value of $V_{limit}$ as $V_{limit} = V_{N+1}$.

**Patentansprüche**

1. System (1) zum Auslösen einer Notbremsung eines geführten Fahrzeugs (2), wobei das System (1) zum Zusammenwirken mit einem Bremssystem (21) des geführten Fahrzeugs (2) konfiguriert ist, wobei das System (1) umfasst:

- eine Verarbeitungseinheit (11), die zum Auslösen der Notbremsung konfiguriert ist, falls sie detektiert, dass eine Geschwindigkeit V des geführten Fahrzeugs an einer Position X des geführten Fahrzeugs eine Geschwindigkeitsbegrenzung $V_{limit}$ überschreitet, die für die Position X definiert ist, um eine Geschwindigkeit $V_0$ an einer Endposition $X_0$ sicherzustellen, die sich vor dem geführten Fahrzeug (2) auf einer Route befindet, der das geführte Fahrzeug (2) folgt;

wobei das System (1) **dadurch gekennzeichnet ist, dass** die Verarbeitungseinheit (11) zum automatischen

Bestimmen der Geschwindigkeitsbegrenzung $V_{limit}$ für die Position X aus einer Notbremsratenfunktion konfiguriert ist, die in Abhängigkeit von der Geschwindigkeit des geführten Fahrzeugs an einer markanten Position $P_j$ variiert.

2. System (1) nach Anspruch 1, umfassend einen Speicher (12), der Folgendes speichert

   - einen Satz S der markanten Positionen $P_j$ mit j=1,...,M, d. h. S = $\{P_1,..,P_M\}$ mit M $\geq$ 1, entlang der Route, der das geführte Fahrzeug folgen muss; und,
   - für jede markante Position $P_j$ eine Notbremsrate $\gamma^{EBR,Pj}(V)$, die eine Funktion der Geschwindigkeit V des geführten Fahrzeugs an der markanten Position $P_j$ ist, d. h. $\gamma^{EBR,Pj}(V)=\gamma^{Pj,v}$.

3. System (1) nach Anspruch 2, wobei die Verarbeitungseinheit zum automatischen Bestimmen, für eine Position T entlang der Route, eines Satzes $L3_T$ interner Positionen des geführten Fahrzeugs konfiguriert ist, die sich innerhalb des geführten Fahrzeugs zwischen seinem vorderen Ende und seinem hinteren Ende befinden, wobei im Folgenden $X_F$ die Position des vorderen Endes des geführten Fahrzeugs ist und $X_R$ die Position seines hinteren Endes ist, mit $|X_F-X_R|$ = L, d. h. die Länge L des geführten Fahrzeugs, wobei die Verarbeitungseinheit konfiguriert ist zum:

   - Bestimmen eines ersten Satzes $L1_{X0}$ interner Positionen $X^{intern\_1,x}_0$, die sich entlang der Länge des geführten Fahrzeugs zwischen der vorderen Endposition $X_F$ des geführten Fahrzeugs und seiner hinteren Endposition $X_R$ befinden, die, wenn sich das vordere Ende des geführten Fahrzeugs an der Endposition $X_0$ befindet, d. h. $X_F = X_0$, jeweils einer der markanten Positionen $P_j$ entsprechen;
   - Bestimmen eines zweiten Satzes $L2_T$ interner Positionen $X^{intern\_2,T}$ des geführten Fahrzeugs, die sich entlang der Länge des geführten Fahrzeugs zwischen $X_F$ und $X_R$ befinden, die, wenn sich das vordere Ende des geführten Fahrzeugs an der Position T befindet, z. B. $T=X_F=X$, jeweils einer der markanten Positionen $P_j$ entsprechen;
   - Erzeugen des Satzes $L3_T$ als die Vereinigung von $L1_{X0}$ und $L2_T$, wobei $L3_T$ ferner die Positionen $X_F$ = T und $X_R$ umfasst, wobei $L3_T$ zur Vereinfachung als $L3_T=\{X_{T\_int,f}\}$ mit f=1,...,$U_T$, $U_T$ geschrieben wird, wobei $U_T$ gleich der Anzahl von Positionen ist, die innerhalb von $L3_T$ für die Position T umfasst sind, und wobei zur Vereinfachung die Positionen $X_{T\_int,f}$ von der am weitesten von $X_F$ entfernten Position bis zu der am nächsten an $X_F$ liegenden Position mit abnehmendem f geordnet sind, das heißt $X_{T\_int,UT}=X_R,X_{T\_int,UT-1},...,X_{T\_int,2}, X_{T\_int,1}=X_F$;

   wobei die Verarbeitungseinheit ferner zum automatischen Hinzufügen, zu dem Satz S markanter Positionen, für jede in $L3_T$ umfasste interne Position $X_{T\_int,f}$ einer ersten Position konfiguriert ist, die der internen Position $X_{T\_int,f}$ entspricht, wenn sich das vordere Ende des geführten Fahrzeugs in $X_0$ befindet, und einer zweiten Position, die der internen Position $X_{T\_int,f}$ entspricht, wenn sich das vordere Ende in T befindet, falls eine solche erste Position beziehungsweise zweite Position noch nicht innerhalb von S umfasst ist.

4. System (1) nach Anspruch 2 oder 3, wobei die Verarbeitungseinheit (11) zum automatischen Berechnen der Geschwindigkeitsbegrenzung $V_{limit}$ durch Implementieren eines iterativen Berechnungsprozesses konfiguriert ist, wobei der iterative Berechnungsprozess umfasst:

   - eine automatische Bestimmung eines Teilsatzes S' des Satzes S markanter Positionen $P_j$, die entlang eines für das geführte Fahrzeug (2) definierten Teilabschnitts der Route umfasst sind, wobei der Teilabschnitt der Route zwischen der aktuellen Position X des geführten Fahrzeugs und der Endposition $X_0$ umfasst ist, wobei die Geschwindigkeit des geführten Fahrzeugs an der Endposition die Endgeschwindigkeit $V_0$ ist, die ein vordefinierter Parameter ist, wobei der Teilsatz S' N der markanten Positionen $P_j$ umfasst, die zur Vereinfachung in dem Satz S' gemäß zunehmendem Abstand von der Endposition $X_0$ geordnet sind und als $X_1,...,X_N$ mit N$\leq$M, d. h. S'=$\{X_{j'}\}$ mit j'=1,...,N, bezeichnet sind;
   - iteratives Berechnen, für i=0,...,N, einer Geschwindigkeit $V_{i+1}$ an einer Position $X_{i+1}$ gemäß:

$$V^2_{i+1} = V^2(X_i,X_{i+1},V_i) = V^2_i + [2 \cdot \gamma^{EBR,Xi}(V_i) + M(X_i) \cdot g \cdot Gradient(X_i)] \cdot (X_{i+1}-X_i)$$

$$(Gl. 1)$$

   wobei

   $X_{i+1}$, beim Starten von der Endposition $X_0$ und Folgen des Teilabschnitts der Route in Richtung der Position X, die markante Position des Teilsatzes S' ist, die auf dem Teilabschnitt der Route nach der Position $X_i$ angetroffen wird;

$\gamma^{EBR,Xi}(V_i)$ der Notbremsratenwert an der Position $X_i$ für die Geschwindigkeit $V_i$ ist: $\gamma^{EBR,Xi}(V_i) = \gamma^{Xi,Vi}$;

g die Schwerkraft ist, d. h. g = 9,81 m/s²;

Gradient $(X_i) = [h(X_i)-h(X_{i+1})] / (X_i-X_{i+1})$, wobei $h(X_i)$ die Höhe an der Position $X_i$ ist;

$M(X_i) = M_e/(M_e+M_{in})$ falls Gradient $(X_i)>0$, andernfalls, falls Gradient $(X_i)\leq 0$, dann $M(X_i) = M_f/(M_f+M_{in})$, wobei $M_e$ die Masse des geführten Fahrzeugs ist, wenn es leer ist, $M_f$ die Masse des geführten Fahrzeugs ist, das eine Last umfasst, und $M_{in}$ die Trägheitsmasse des geführten Fahrzeugs ist;

wobei die Verarbeitungseinheit zum automatischen Festlegen des Geschwindigkeitsbegrenzungswerts von $V_{limit}$ auf $V_{limit} = V_{N+1}$ konfiguriert ist.

5. System nach Anspruch 4, wobei bei jeder Iteration die Verarbeitungseinheit zum automatischen Prüfen konfiguriert ist, ob sich der Notbremsratenwert zwischen $X_{i+1}$ und $X_i$ bei Berücksichtigung der berechneten Geschwindigkeit $V_{i+1}$ ändert.

6. System nach Anspruch 5, wobei $\gamma^{EBR,Xi}(V)$ eine stückweise konstante Funktion ist, die konstante Werte in aufeinanderfolgenden Geschwindigkeitsintervallen gemäß

$$\gamma^{EBR,Xi}(V) = \gamma^{Xi,V_t^{EB,X_i}} = \texttt{constant\_t annimmt}, \text{ falls } V_{t-1}^{EB,x_i} \leq V < V_t^{EB,x_i}, \text{ wobei}$$

t=1,...,Q, Q $\geq$ 2 die Anzahl von Geschwindigkeitsintervallen ist, wobei Q und t positive ganze Zahlen sind;

wobei das Prüfen umfasst:

- Definieren eines Parameters k, dessen Wert konfiguriert ist, um iterativ um 1 Einheit erhöht zu werden;
- Definieren einer Zwischenposition $X_{i,k}$ und einer Zwischengeschwindigkeit $V_{i,k}$ und anfängliches Festlegen von $X_{i,k} = X_i$ und $V_{i,k} = V_i$;
- Festlegen eines Anfangswerts des Parameters k auf 0, d. h. k=0;

wobei das Prüfen ferner die folgenden Prüfschritte umfasst:

- Bestimmen, ob $\gamma^{EBR,Xi,k}(V_{i+1}) = \gamma^{EBR,Xi,k}(V_{i,k})$; und falls ja, dann Fortsetzen des Iterationsprozesses, wobei i um eine Einheit erhöht wird (i = i+1), andernfalls

(i) Bestimmen des Geschwindigkeitsintervalls, zu dem $V_{i,k}$ gehört, d. h. für welchen Wert S, der von t angenommen wird, man $V^{EB,Xi}_S \leq V_{i,k} < V^{EB,Xi}_{S+1}$ hat, und Festlegen eines Notbremsgeschwindigkeitswerts $V^{EB,Xi,k} = V^{EB,Xi}_{S+1}$

(ii) Bestimmen einer nächsten Zwischenposition $X_{i,k+1}$ gemäß

$$X_{i,k+1} = X_{i,k} + ((V^{EB,Xi,k})^2 - V^2_{i,k}) / [2 \cdot \gamma^{EBR,Xi,k}(V_{i,k}) + M$$

$(X_{i,k}) \cdot g \cdot \text{Gradient} (X_{i,k})]$

(iii) Festlegen von $V^2_{i,k+1} = (V^{EB,Xi,k})^2$;

(iv) Festlegen von $V^2_{i+1} = V^2(X_{i,k+1}, X_{i+1}, V_{i,k+1})$;

(v) Erhöhen von k um eine Einheit;

und Wiederholen der Prüfschritte.

7. System nach einem der Ansprüche 4-6, wobei für jede markante Position, die zu dem Satz S' gehört und der eine Geschwindigkeitsbeschränkung zugeordnet ist, die Verarbeitungseinheit zum automatischen Bestimmen konfiguriert ist, ob die für die markante Position berechnete Geschwindigkeit $V_{i+1}$ größer als die der markanten Position zugeordnete Geschwindigkeitsbeschränkung ist, und im Bejahungsfall die Verarbeitungseinheit konfiguriert ist, um $X_0$ gleich der markanten Position und $V_0$ gleich der Geschwindigkeitsbeschränkung festzulegen und den iterativen Berechnungsprozess über i erneut zu starten, andernfalls die Geschwindigkeitsbeschränkung zu ignorieren und die Iteration über i fortzusetzen.

8. System nach Anspruch 5 oder 6, wobei bei jeder Iteration und nach dem Prüfen die Verarbeitungseinheit ferner konfiguriert ist, um automatisch eine weitere Prüfung durchzuführen, die konfiguriert ist, um zu bestimmen, ob eine Geschwindigkeitsbeschränkung $V_{constraint\ speed}$, die für das geführte Fahrzeug an einer Position $X_{constraint\ speed}$, die zwischen $X_R$ und $X_F = X_{i+1}$ umfasst ist, gilt, restriktiver als $V_{i+1}$ wäre, und im Bejahungsfall $X_0 = X_{constraint\ speed}$ und $V_0 = V_{constraint\ speed}$ festzulegen und den iterativen Berechnungsprozess über i erneut zu starten, andernfalls die Geschwindigkeitsbeschränkung zu ignorieren und die Iteration über i fortzusetzen.

**9.** System nach den Ansprüchen 3 und 8, wobei zum Durchführen der weiteren Prüfung die Verarbeitungseinheit konfiguriert ist, solange $i \leq N-1$ ist, zum:

- iterativen Berechnen, für $c = 1, ..., U_{Xi+1}-1$, einer Geschwindigkeit $V_{Xi+1\_int,c+1}$ an einer Position $X_{Xi+1\_int,c+1}$ gemäß:

$$V^2_{Xi+1\_int,c+1} = V^2(X_{Xi+1\_int,c}, X_{Xi+1\_int,c+1}, V_{Xi+1\_int,c}) = V^2_{Xi+1\_int,c} + [2$$
$$\cdot \gamma^{EBR,X_{Xi+1\_int,c}}(V_{Xi+1\_int,c}) + M(X_{Xi+1\_int,c}) \cdot g \cdot Gradient$$
$$(X_{Xi+1\_int,c})] \cdot (X_{Xi+1\_int,c+1} - X_{Xi+1\_int,c})$$

wobei
$V_{Xi+1\_int,1} = V_{i+1}$ und $X_{Xi+1\_int,1} = X_{i+1}$;
- optionalen Wiederholen der Prüfschritte gemäß Anspruch 5 oder 6 in Bezug auf die Iteration über c, d. h. wobei bei jeder Iteration über c die Verarbeitungseinheit zum automatischen Prüfen konfiguriert ist, ob sich der Notbremsratenwert zwischen $X_{Xi+1\_int,c+1}$ und $X_{Xi+1\_int,c}$ bei Berücksichtigung der berechneten Geschwindigkeit $V_{Xi+1\_int,c+1}$ ändert;
- Bestimmen, für welchen Wert C' von c' = 0, ..., $U_{Xi+1}-1$, der Ausdruck $(V^2_{Xi+1\_int,c'+1} - V^2_{c'}) + V^2_0$ einen Minimalwert erreicht, und
- falls der Minimalwert kleiner als $V^2_{constraint\ speed}$ ist, dann Ignorieren der Geschwindigkeitsbeschränkung und Fortsetzen der Iteration über i, andernfalls Festlegen von $X_0 = X_{i+1}$ und $V_0 = V_{constraint\ speed}$ und erneutes Starten des iterativen Berechnungsprozesses über i.

**10.** System nach einem der Ansprüche 4 bis 9, wobei am Ende der Iteration, d. h. für i = N, die Verarbeitungseinheit ferner konfiguriert ist zum Festlegen von $X_F = X$ und zum automatischen Bestimmen, ob es zwischen der Position $X_F = X$ und der Position $X_R$ eine interne Position $X_{intern\_Vlim}$ gibt, die einen niedrigeren Wert der Geschwindigkeitsbegrenzung $V_{limit}$ erfordert als den als $V_{limit} = V_{N+1}$ erhaltenen Geschwindigkeitsbegrenzungswert, und im Bejahungsfall zum Festlegen des Werts von $V_{limit}$ gleich dem niedrigeren Wert.

**11.** System nach Anspruch 3 und 10, wobei zum Bestimmen von $X_{intern\_Vlim}$ die Verarbeitungseinheit konfiguriert ist zum

- iterativen Berechnen, für $c = 1, ..., U_{XN+1}-1$, einer Geschwindigkeit $V_{XN+1\_int,c+1}$ an einer Position $X_{XN+1\_int,c+1}$ gemäß:

$$V^2_{XN+1\_int,c+1} = V^2(X_{XN+1\_int,c}, X_{XN+1\_int,c+1}, V_{XN+1\_int,c}) =$$
$$V^2_{XN+1\_int,c} + [2 \cdot \gamma^{EBR,X_{XN+1\_int,c}}(V_{XN+1\_int,c}) + M(X_{XN+1\_int,c}) \cdot g \cdot$$
$$Gradient(X_{XN+1\_int,c})] \cdot (X_{XN+1\_int,c+1} - X_{XN+1\_int,c})$$

wobei
$V_{XN+1\_int,1} = V_{N+1}$ und $X_{XN+1\_int,1} = X_{N+1}$;
- optionalen Wiederholen der Prüfschritte gemäß Anspruch 5 oder 6 in Bezug auf die Iteration über c, d. h. wobei bei jeder Iteration über c die Verarbeitungseinheit zum automatischen Prüfen konfiguriert ist, ob sich der Notbremsratenwert zwischen $X_{XN+1\_int,c+1}$ und $X_{XN+1\_int,c}$ bei Berücksichtigung der berechneten Geschwindigkeit $V_{XN+1\_int,c+1}$ ändert;
- Bestimmen, für welchen Wert C" von C" = 0, ..., $U_{Xi+1}-1$, der Ausdruck $(V^2_{XN+1\_int,c"+1} - V^2_{c"}) + V^2_0$ einen Minimalwert erreicht, und
- falls der Minimalwert kleiner als $V^2_{N+1}$ ist, dann Festlegen des Werts von $V_{limit}$ gleich sqrt $(V^2_{XN+1\_int,c"+1})$, andernfalls Beibehalten von $V_{limit}$ gleich $V_{N+1}$.

**12.** System nach Anspruch 11, wobei die Verarbeitungseinheit konfiguriert ist, um beim Berechnen der Geschwindig-

keitsbegrenzung $V_{limit}$ einen Höhenfehler automatisch zu berücksichtigen.

**13.** Verfahren zum Auslösen einer Notbremsung eines geführten Fahrzeugs (2) mittels eines Systems (1), das zum Zusammenwirken mit einem Bremssystem (21) des geführten Fahrzeugs (2) konfiguriert ist, wobei das Verfahren umfasst:

- Bestimmen, ob eine Geschwindigkeit V eines geführten Fahrzeugs an einer Position X eines geführten Fahrzeugs eine Geschwindigkeitsbegrenzung $V_{limit}$ überschreitet, die für die Position X für das geführte Fahrzeug (2) definiert ist;
- Auslösen der Notbremsung, falls die Geschwindigkeit V des geführten Fahrzeugs an der Position X des geführten Fahrzeugs die Geschwindigkeitsbegrenzung $V_{limit}$ überschreitet, um für das geführte Fahrzeug eine Geschwindigkeit $V_0$ an einer Endposition $X_0$ sicherzustellen, die sich vor dem geführten Fahrzeug (2) auf einer Route befindet, der das geführte Fahrzeug (2) folgt;

wobei das Verfahren **dadurch gekennzeichnet ist, dass** es umfasst:

- automatisches Bestimmen der Geschwindigkeitsbegrenzung $V_{limit}$ für die Position X aus einer Notbremsratenfunktion, die für eine gegebene markante Position $P_j$ in Abhängigkeit von der Geschwindigkeit des geführten Fahrzeugs an der markanten Position $P_j$ variiert.

**14.** Verfahren nach Anspruch 13, umfassend das Speichern, in einem Speicher (12) des Systems (1), von

- einem Satz S der markanten Positionen $P_j$ mit j=1,...,M, d. h. $S = \{P_1,...,P_M\}$ mit $M \geq 1$, entlang der Route, der das geführte Fahrzeug folgen muss; und,
- für jede markante Position $P_j$ einer Notbremsrate $\gamma^{EBR,Pj}$, die eine Funktion der Geschwindigkeit V des geführten Fahrzeugs an der markanten Position $P_j$ ist, d. h. $\gamma^{EBR,Pj}(V) = \gamma^{Pj,V}$.

**15.** Verfahren nach Anspruch 14, umfassend das automatische Berechnen der Geschwindigkeitsbegrenzung $V_{limit}$ durch Implementieren eines iterativen Berechnungsprozesses, wobei der iterative Berechnungsprozess umfasst:

- eine automatische Bestimmung eines Teilsatzes S' des Satzes S markanter Positionen $P_j$, die entlang eines für das geführte Fahrzeug definierten Teilabschnitts der Route umfasst sind, wobei der Teilabschnitt der Route zwischen der aktuellen Position X des geführten Fahrzeugs und der Endposition $X_0$ umfasst ist, die von dem geführten Fahrzeug zu erreichen ist, wenn es sich entlang des Teilabschnitts der Route von der aktuellen Position X in Richtung der Endposition $X_0$ gemäß einer gegebenen Fahrtrichtung bewegt, wobei die Geschwindigkeit des geführten Fahrzeugs (2) an der Endposition die Endgeschwindigkeit $V_0$ ist, die ein vordefinierter Parameter ist, wobei der Teilsatz S' N der markanten Positionen $P_j$ umfasst, die zur Vereinfachung in dem Satz S' gemäß zunehmendem Abstand von der Endposition $X_0$ geordnet sind und als $X_1,...,X_N$ mit $N \leq M$, d. h. $S'=\{X_{j'}\}$ mit j'=1,...,N, bezeichnet sind;
- iteratives Berechnen, für i=0,...,N, einer Geschwindigkeit $V_{i+1}$ an einer Position $X_{i+1}$ gemäß:

$$V^2_{i+1} = V^2(X_i, X_{i+1}, V_i) = V^2_i + [2 \cdot \gamma^{EBR,Xi}(V_i) + M(X_i) \cdot g \cdot \text{Gradient}(X_i)] \cdot (X_{i+1} - X_i)$$

$$(\text{Gl. 1})$$

wobei

$X_{i+1}$, beim Starten von der Endposition $X_0$ und Folgen des Teilabschnitts der Route in Richtung der Position X, die markante Position des Teilsatzes S' ist, die auf dem Teilabschnitt der Route nach der Position $X_i$ angetroffen wird;
$\gamma^{EBR,Xi}(V_i)$ der Notbremsratenwert an der Position $X_i$ für die Geschwindigkeit $V_i$: $\gamma^{EBR,Xi}(V_i) = \gamma^{Xi,Vi}$ ist;
g die Schwerkraft ist, d. h. g = 9,81 m/s²;

$$\text{Gradient}(X_i) = [h(X_i) - h(X_{i+1})] / (X_i - X_{i+1}),$$

wobei $h(X_i)$ die Höhe an der Position $X_i$ ist;

$$M(X_i) = M_e / (M_e + M_{in}),$$

falls Gradient $(X_i) > 0$, andernfalls, falls Gradient $(X_i) \leq 0$, dann $M(X_i) = M_f / (M_f + M_{in})$, wobei $M_e$ die Masse des geführten Fahrzeugs ist, wenn es leer ist, $M_f$ die Masse des geführten Fahrzeugs ist, das eine Last umfasst, und $M_{in}$ die Trägheitsmasse des geführten Fahrzeugs ist;

und automatisches Festlegen des Geschwindigkeitsbegrenzungswerts von $V_{limit}$ als $V_{limit} = V_{N+1}$.

## Revendications

1. Système (1) pour déclencher un freinage d'urgence d'un véhicule guidé (2), ledit système (1) étant configuré pour coopérer avec un système de freinage (21) du véhicule guidé (2), ledit système (1) comprenant :

   - une unité de traitement (11) configurée pour déclencher ledit freinage d'urgence si elle détecte qu'une vitesse V de véhicule guidé à une position X de véhicule guidé dépasse une limite de vitesse $V_{limit}$ définie pour ladite position X afin de garantir une vitesse $V_0$ à une position finale $X_0$ située en avant du véhicule guidé (2) sur un parcours suivi par ledit véhicule guidé (2) ;

   le système (1) étant **caractérisé en ce que** ladite unité de traitement (11) est configurée pour déterminer automatiquement la limite de vitesse $V_{limit}$ pour ladite position X à partir d'une fonction de taux de freinage d'urgence qui varie en fonction de la vitesse de véhicule guidé à une position remarquable $P_j$.

2. Système (1) selon la revendication 1, comprenant une mémoire (12) stockant

   - un ensemble S desdites positions remarquables $P_j$ avec $j=1,...,M$, c'est-à-dire $S = \{P_1, ...,P_M\}$ avec $M \geq 1$, le long du parcours qui doit être suivi par le véhicule guidé ; et,
   - pour chaque position remarquable $P_j$, un taux de freinage d'urgence $\gamma^{EBR,Pj}(V)$ qui est une fonction de la vitesse V du véhicule guidé à ladite position remarquable $P_j$, c'est-à-dire $\gamma^{EBR,Pj}(V) = \gamma^{Pj,V}$.

3. Système (1) selon la revendication 2, dans lequel l'unité de traitement est configurée pour déterminer automatiquement, pour une position T le long dudit parcours, un ensemble $L3_T$ de positions internes de véhicule guidé qui sont situées au sein du véhicule guidé entre son extrémité avant et son extrémité arrière, dans lequel, dans ce qui suit, $X_F$ est la position de l'extrémité avant du véhicule guidé, et $X_R$ est la position de son extrémité arrière, avec $|X_F - X_R| = L$, c'est-à-dire la longueur L de véhicule guidé, l'unité de traitement étant configurée pour :

   - déterminer un premier ensemble $L1_{x0}$ de positions internes $X^{intern\_i,X_0}$ situées le long de la longueur du véhicule guidé, entre la position d'extrémité avant $X_F$ du véhicule guidé et sa position d'extrémité arrière $X_R$, qui, lorsque ladite extrémité avant du véhicule guidé est située à la position finale $X_0$, c'est-à-dire $X_F = X_0$, correspondent chacune à l'une desdites positions remarquables $P_j$ ;
   - déterminer un second ensemble $L2_T$ de positions internes $X^{intern\_2,T}$ de véhicule guidé situées, le long de la longueur du véhicule guidé, entre $X_F$ et $X_R$, qui, lorsque l'extrémité avant du véhicule guidé est située à la position T, par ex. $T = X_F = X$, correspondent chacune à l'une desdites positions remarquables $P_j$ ;
   - créer ledit ensemble $L3_T$ comme étant l'union de $L1_{x0}$ et $L2_T$, dans lequel $L3_T$ comprend en outre les positions $X_F = T$ et $X_R$, dans lequel, par simplicité, $L3_T$ s'écrit comme $L3_T = \{X_{T\_int,f}\}$ avec $f = 1, ..., U_T$, $U_T$ étant égal au nombre de positions comprises au sein de $L3_T$ position T, et dans lequel, par simplicité, les positions $X_{T\_int,f}$ sont classées de la position la plus éloignée de $X_F$ à la position la plus proche de $X_F$ dans l'ordre décroissant de f, autrement dit $X_{T\_int,UT} = X_R, X_{T\_int,UT-1}, ..., X_{T\_int,2}, X_{T\_int,1} = X_F$ ;

   dans lequel l'unité de traitement est en outre configurée pour ajouter automatiquement, audit ensemble S de positions remarquables, pour chaque position interne $X_{T\_int,f}$ comprise dans $L3_T$, une première position qui correspond à ladite position interne $X_{T\_int,f}$ lorsque l'extrémité avant du véhicule guidé est située en $X_0$ et une seconde position qui correspond à ladite position interne $X_{T\_int,f}$ lorsque ladite extrémité avant est située en T, si cette première position, respectivement cette seconde position, n'est pas encore comprise au sein de S.

4. Système (1) selon la revendication 2 ou 3, dans lequel l'unité de traitement (11) est configurée pour calculer automatiquement la limite de vitesse $V_{limit}$ par la mise en œuvre d'un processus de calcul itératif, dans lequel ledit processus de calcul itératif comprend :

- une détermination automatique d'un sous-ensemble S' dudit ensemble S de positions remarquables $P_j$ comprises le long d'une section dudit parcours défini pour le véhicule guidé (2), dans lequel ladite section de parcours est comprise entre la position X actuelle du véhicule guidé et la position finale $X_0$, dans lequel la vitesse du véhicule guidé à ladite position finale est la vitesse finale $V_0$ qui est un paramètre prédéfini, dans lequel le sous-ensemble S' comprend N desdites positions remarquables $P_j$, qui, par simplicité, sont classées dans l'ensemble S' dans l'ordre croissant de la distance par rapport à la position finale $X_0$ et notées $X_1,...,X_N$ avec N≤M, c'est-à-dire S'={$X_{j'}$} avec j'=1,...,N ;
- le calcul, de manière itérative, pour i=0,...,N, d'une vitesse $V_{i+1}$ à une position $X_{i+1}$ selon :

$$V^2{}_{i+1} = V^2(X_i, X_{i+1}, V_i) =$$

$$V^2{}_i + [2 \cdot \gamma^{EBR,Xi}(V_i) + M(X_i) \cdot g \cdot \texttt{gradient}(X_i)] \cdot (X_{i+1} - X_i)$$

$$(\text{Eq. 1})$$

dans lequel

$X_{i+1}$ est, en partant de la position finale $X_0$ et en suivant ladite section de parcours vers la position X, la position remarquable dudit sous-ensemble S' qui est rencontrée sur ladite section de parcours après la position $X_i$ ;
$\gamma^{EBR,Xi}(V_i)$ est la valeur de taux de freinage d'urgence à la position $X_i$ pour la vitesse Vi:$\gamma^{EBR,Xi}(Vi)=\gamma^{Xi,Vi}$ ;
g est la gravité, c'est-à-dire g=9,81 m/s$^2$ ;

$$\texttt{gradient}(X_i) = [h(X_i) - h(X_{i+1})]/(X_i - X_{i+1}),$$

dans lequel $h(X_i)$ est la hauteur à la position $X_i$ ;

$$M(X_i) = M_e/(M_e + M_{in})$$

si gradient $(X_i)>0$, dans le cas contraire, si gradient $(X_i) \le 0$, alors $M(X_i) = M_f/(M_f + M_{in})$, dans lequel $M_e$ est la masse du véhicule guidé lorsqu'il est vide, $M_f$ est la masse du véhicule guidé comprenant une charge, et $M_{in}$ est la masse inertielle du véhicule guidé ;

l'unité de traitement étant configurée pour régler automatiquement la valeur de limite de vitesse de $V_{limit}$ comme étant $V_{limit} = V_{N+1}$.

5. Système selon la revendication 4, dans lequel, à chaque itération, l'unité de traitement est configurée pour tester automatiquement si la valeur de taux de freinage d'urgence change entre $X_{i+1}$ et $X_i$ lors de la prise en compte de la vitesse calculée $V_{i+1}$.

6. Système selon la revendication 5, dans lequel $\gamma^{EBR,Xi}(V)$ est une fonction constante par morceaux prenant des valeurs constantes sur des intervalles de vitesse successifs selon $\gamma^{EBR,Xi}(V) = \gamma^{Xi,V^{EB,X_i}_t} = \texttt{constant\_t}$ si $V^{EB,X_i}_{t-1} \le V < V^{EB,X_i}_t$ , avec t=1,...,Q, Q≥2 étant le nombre d'intervalles de vitesse, Q et t étant des nombres entiers positifs ;

dans lequel ledit test comprend :

- la définition d'un paramètre k dont la valeur est configurée pour être augmentée de manière itérative de 1 unité ;
- la définition d'une position intermédiaire $X_{i,k}$ et d'une vitesse intermédiaire $V_{i,k}$, et le réglage de manière initiale de $X_{i,k} = X_i$ et $V_{i,k} = V_i$ ;
- le réglage d'une valeur initiale du paramètre k sur 0, c'est-à-dire k=0 ;
ledit test comprenant en outre les étapes de test suivantes :

- la détermination de si $\gamma^{EBR,Xi,k}(V_{i+1}) = \gamma^{EBR,Xi,k}(V_{i,k})$ ; et si tel est le cas, alors la poursuite du processus d'itération dans lequel i est incrémenté d'une unité (i = i+1), dans le cas contraire
(i) la détermination de l'intervalle de vitesse auquel $V_{i,k}$ appartient, c'est-à-dire pour quelle valeur S prise par t on a $V^{EB,Xi}_S \le V_{i,k} < V^{EB,Xi}_{S+1}$ et le réglage d'une valeur de vitesse de freinage d'urgence $V^{EB,Xi,k} = V^{EB,Xi}_{S+1}$

(ii) la détermination d'une position intermédiaire suivante $X_{i,k+1}$ selon

$$X_{i,k+1} = X_{i,k} + ((V^{EB,Xi,k})^2 - V^2_{i,k}) / [2 \cdot \gamma^{EBR,Xi,k}(V_{i,k}) + M(X_{i,k}) \cdot g \cdot gradient(X_{i,k})]$$

(iii) le réglage de $V^2_{i,x+1} = (V^{EB,Xi,k})^2$ ;
(iv) le réglage de $V^2_{i+1} = V^2(X_{i,k+1}, X_{i,1}, V_{i,k+1})$ ;
(v) l'incrémentation de k d'une unité ;

et la répétition des étapes de test.

7. Système selon l'une des revendications 4-6, dans lequel pour chaque position remarquable qui appartient à l'ensemble S' et à laquelle une contrainte de vitesse est associée, l'unité de traitement est configurée pour déterminer automatiquement si la vitesse $V_{i+1}$ calculée pour ladite position remarquable est supérieure à la contrainte de vitesse associée à ladite position remarquable, et dans l'affirmative, alors l'unité de traitement est configurée pour régler $X_0$ égal à ladite position remarquable et $V_0$ égal à ladite contrainte de vitesse, et pour redémarrer à nouveau ledit processus de calcul itératif sur i, dans le cas contraire ignorer ladite contrainte de vitesse et poursuivre l'itération sur i.

8. Système selon la revendication 5 ou 6, dans lequel, à chaque itération et après ledit test, l'unité de traitement est en outre configurée pour réaliser automatiquement un autre test configuré pour déterminer si une contrainte de vitesse $V_{constraint\ speed}$ appliquant au véhicule guidé à une position $X_{constraint\ speed}$ comprise entre $X_R$ et $X_F = X_{i+1}$ serait plus restrictive que $V_{i+1}$, et, dans l'affirmative, régler $X_0 = X_{constraint\ speed}$ et $V_0 = V_{constraint\ speed}$ et redémarrer à nouveau le processus de calcul itératif sur i, dans le cas contraire, ignorer ladite contrainte de vitesse, et poursuivre l'itération sur i.

9. Système selon les revendications 3 et 8, dans lequel pour réaliser ledit autre test, l'unité de traitement est configurée pour, tant que $i \le N-1$ :

- calculer de manière itérative, pour $c=1,...,U_{xi+1}-1$, une vitesse $V_{Xi+1\_int,c+1}$ à une position $X_{Xi+1\_int,c+1}$ selon :

$$V^2_{Xi+1\_int,c+1} = V^2(X_{Xi+1\_int,c}, X_{Xi+1\_int,c+1}, V_{Xi+1\_int,c}) = V^2_{Xi+1\_int,c} + [2 \cdot \gamma^{EBR,X}_{Xi+1\_int,c}(V_{Xi+1\_int,c}) + M(X_{Xi+1\_int,c}) g \cdot gradient(X_{Xi+1\_int,c})] \cdot (X_{Xi+1\_int,c+1} - X_{Xi+1\_int,c})$$

dans lequel
$V_{Xi+1\_int,1} = V_{i+1}$ et $X_{Xi+1\_int,1} = X_{i+1}$ ;
- facultativement, répéter lesdites étapes de test selon la revendication 5 ou 6 par rapport à l'itération sur c, c'est-à-dire, dans lequel à chaque itération sur c, l'unité de traitement est configurée pour tester automatiquement si la valeur de taux de freinage d'urgence change entre $X_{Xi+1\_int,c+1}$ et $X_{Xi+1\_int,c}$ lors de la prise en compte de la vitesse calculée $V_{Xi+1\_int,c+1}$ ;
- déterminer pour quelle valeur C' de $c'=0, ...,U_{Xi+1}-1$, l'expression $(V^2_{Xi+1\_int,c'+1} - V^2_{c'}) + V^2_0$ atteint une valeur minimale, et
- si ladite valeur minimale est inférieure à $V^2_{constraint\ speed}$, alors ignorer ladite contrainte de vitesse et poursuivre l'itération sur i, dans le cas contraire régler $X_0 = X_{i+1}$ et $V_0 = V_{constraint\ speed}$ et redémarrer à nouveau le processus de calcul itératif sur i.

10. Système selon l'une des revendications 4 à 9, dans lequel, à la fin de l'itération, c'est-à-dire pour i=N, l'unité de traitement est en outre configurée pour régler $X_F = X$, et pour déterminer automatiquement si, entre la position $X_F = X$ et ladite position $X_R$, se trouve une quelconque position interne $X_{intern\_Vlim}$ nécessitant une valeur plus basse de ladite limite de vitesse $V_{limit}$ que la valeur de limite de vitesse obtenue comme étant $V_{limit} = V_{N+1}$. et, dans l'affirmative, pour régler la valeur de $V_{limit}$ égale à ladite valeur plus basse.

11. Système selon la revendication 3 et 10, dans lequel, pour déterminer $X_{intern\_Vlim}$, l'unité de traitement est configurée pour

- calculer de manière itérative, pour $c=1,...,U_{XN+1}-1$, une vitesse $V_{XN+1\_int,c+1}$ à une position $X_{XN+1\_int,c+1}$ selon :

$$V^2_{XN+1\_int,c+1} = V^2(X_{XN+1\_int,c}, X_{XN+1\_int,c+1}, V_{XN+1\_int,c}) =$$
$$V^2_{XN+1\_int,c} + [2 \cdot \gamma^{EBR,X_{XN+1\_int,c}}(V_{XN+1\_int,c}) + M(X_{XN+1\_int,c}) \cdot$$
$$g \cdot gradient(X_{XN+1\_int,c})] \cdot (X_{XN+1\_int,c+1} - X_{XN+1\_int,c})$$

dans lequel
$V_{XN+1\_int,1} = V_{N+1}$ et $X_{XN+1\_int,1} = X_{N+1}$ ;
- facultativement, répéter lesdites étapes de test selon la revendication 5 ou 6 par rapport à l'itération sur c, c'est-à-dire, dans lequel à chaque itération sur c, l'unité de traitement est configurée pour tester automatiquement si la valeur de taux de freinage d'urgence change entre $X_{XN+1\_int,c+1}$ et $X_{XN+1\_int,c}$, lors de la prise en compte de la vitesse calculée $V_{XN+1\_int,c+1}$ ;
- déterminer pour quelle valeur C'' de $c''=0,...,U_{Xi+1}-1$, l'expression $(V^2_{XN+1\_int,c''+1} - V^2_{c''}) + V^2_0$ atteint une valeur minimale, et
- si ladite valeur minimale est inférieure à $V^2_{N+1}$, alors régler la valeur de $V_{limit}$ égale à racine carrée $(V^2_{XN+1\_int,c''+1})$, dans le cas contraire, laisser $V_{limit}$ égale à $V_{N+1}$.

**12.** Système selon la revendication 11, dans lequel l'unité de traitement est configurée pour prendre en compte automatiquement une erreur d'altitude lors du calcul de ladite limite de vitesse $V_{limit}$.

**13.** Procédé pour déclencher un freinage d'urgence d'un véhicule guidé (2) au moyen d'un système (1) configuré pour coopérer avec un système de freinage (21) du véhicule guidé (2), le procédé comprenant :

- la détermination de si une vitesse V de véhicule guidé à une position X de véhicule guidé dépasse une limite de vitesse $V_{limit}$ définie pour ladite position X pour ledit véhicule guidé (2) ;
- le déclenchement dudit freinage d'urgence si la vitesse V de véhicule guidé à la position X de véhicule guidé dépasse la limite de vitesse $V_{limit}$ afin de garantir,

pour ledit véhicule guidé, une vitesse $V_0$ à une position finale $X_0$ située en avant du véhicule guidé (2) sur un parcours suivi par ledit véhicule guidé (2) ;
le procédé étant **caractérisé en ce qu'**il comprend :

- la détermination de manière automatique de la limite de vitesse $V_{limit}$ pour ladite position X à partir d'une fonction de taux de freinage d'urgence qui, pour une position remarquable $P_j$ donnée, varie en fonction de la vitesse de véhicule guidé à ladite position remarquable $P_j$.

**14.** Procédé selon la revendication 13, comprenant le stockage, dans une mémoire (12) dudit système (1)

- d'un ensemble S desdites positions remarquables $P_j$ avec $j=1,...,M$, c'est-à-dire $S = \{P_1,...,P_M\}$ avec $M \geq 1$, le long du parcours qui doit être suivi par le véhicule guidé ; et,
- pour chaque position remarquable $P_j$, d'un taux de freinage d'urgence $\gamma^{EBR,Pj}$ qui est une fonction de la vitesse V du véhicule guidé à ladite position remarquable $P_j$, c'est-à-dire $\gamma^{EBR,Pj}(V) = \gamma^{Pj,v}$.

**15.** Procédé selon la revendication 14, comprenant le calcul de manière automatique de la limite de vitesse $V_{limit}$ par la mise en œuvre d'un processus de calcul itératif, dans lequel ledit processus de calcul itératif comprend :

- une détermination automatique d'un sous-ensemble S' dudit ensemble S de positions remarquables $P_j$ comprises le long d'une section dudit parcours défini pour le véhicule guidé, dans lequel ladite section de parcours est comprise entre la position X actuelle du véhicule guidé et la position finale $X_0$ devant être atteinte par le véhicule guidé lorsqu'il se déplace le long de ladite section de parcours à partir de la position X actuelle vers la position finale $X_0$ selon une direction de circulation donnée, dans lequel la vitesse du véhicule guidé (2) à ladite position finale est la vitesse finale $V_0$ qui est un paramètre prédéfini, dans lequel le sous-ensemble S' comprend N desdites positions remarquables $P_j$, qui, par simplicité, sont classées dans l'ensemble S' dans l'ordre croissant de la distance par rapport à la position finale $X_0$ et notées $X_1,...,X_N$ avec $N \leq M$, c'est-à-dire $S' = \{X_{j'}\}$ avec $j'=1,...,N$ ;
- le calcul de manière itérative, pour $i=0,...,N$, d'une vitesse $V_{i+1}$ à une position $X_{i+1}$ selon :

$$V^2_{i+1} = V^2(X_i, X_{i+1}, V_i) =$$

$$V^2_i + [2 \cdot \gamma^{EBR,Xi}(V_i) + M(X_i) \cdot g \cdot gradient(X_i)] \cdot (X_{i+1} - X_i)$$

$$(Eq. 1)$$

dans lequel

$X_{i+1}$ est, en partant de la position finale $X_0$ et en suivant ladite section de parcours vers la position X, la position remarquable dudit sous-ensemble S' qui est rencontrée sur ladite section de parcours après la position $X_i$ ; $\gamma^{EBR,Xi}(V_i)$ est la valeur de taux de freinage d'urgence à la position $X_i$ pour la vitesse $V_i$ : $\gamma^{EBR,Xi}(Vi) = \gamma^{Xi,Vi}$ ; g est la gravité, c'est-à-dire g = 9,81 m/s$^2$ ;

$$gradient (X_i) = [h(X_i) - h(X_{i+1})] / (X_i - X_{i+1}),$$

dans lequel $h(X_i)$ est la hauteur à la position $X_i$ ;

$$M(X_i) = M_e / (M_e + M_{in})$$

si gradient $(X_i) > 0$, dans le cas contraire, si gradient $(X_i) \leq 0$, alors $M(X_i) = M_f/(M_f + M_{in})$, dans lequel $M_e$ est la masse du véhicule guidé lorsqu'il est vide, $M_f$ est la masse du véhicule guidé comprenant une charge, et $M_{in}$ est la masse inertielle du véhicule guidé ;

et le réglage de manière automatique de la valeur de limite de vitesse de $V_{limit}$ comme étant $V_{limit} = V_{N+1}$.

FIG 1

FIG 2

FIG 3

FIG 4

FIG 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3090918 B1